(19) **Europäisches Patentamt**
**European Patent Office**
**Office européen des brevets**

(11) **EP 4 259 341 B1**

(12) **EUROPEAN PATENT SPECIFICATION**

(45) Date of publication and mention
of the grant of the patent:
**30.07.2025  Bulletin 2025/31**

(21) Application number: **20838603.7**

(22) Date of filing: **09.12.2020**

(51) International Patent Classification (IPC):
**B05C 5/02** *(2006.01)*     **B05C 11/10** *(2006.01)*
**B29C 48/31** *(2019.01)*     **B29C 48/92** *(2019.01)*

(52) Cooperative Patent Classification (CPC):
**B05C 5/0262; B05C 11/1005; B29C 48/2556;**
**B29C 48/313; B29C 48/92;** B29C 48/07;
B29C 48/267; B29C 48/35; B29C 2948/92152;
B29C 2948/92428; B29C 2948/926;
B29C 2948/92904

(86) International application number:
**PCT/IB2020/061688**

(87) International publication number:
**WO 2022/123296 (16.06.2022 Gazette 2022/24)**

(54) **SLOT DIE POSITION ADJUSTMENT WITH RINGING CONSTRAINT**

SCHLITZDÜSENPOSITIONSEINSTELLUNG MIT KLINGELEINSCHRÄNKUNG

RÉGLAGE DE POSITION DE FILIÈRE PLATE À CONTRAINTE DE SONNERIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.10.2023  Bulletin 2023/42**

(73) Proprietor: **3M Innovative Properties Company**
**Saint Paul, Minnesota 55133-3427 (US)**

(72) Inventors:
• **SECOR, Robert B.**
**Saint Paul, Minnesota 55133-3427 (US)**
• **YAPEL, Robert A.**
**Saint Paul, Minnesota 55133-3427 (US)**
• **GALASSI, Nicholas F.**
**Saint Paul, Minnesota 55133-3427 (US)**
• **LOUKUSA, Pentti K.**
**Hanover, Minnesota 55341 (US)**
• **THOMAS, Paul C.**
**Saint Paul, Minnesota 55133-3427 (US)**

• **HEINZ, Robert**
**41453 Neuss (DE)**
• **HOLTKAMP, Tobias**
**41453 Neuss (DE)**
• **KOSTUCH, Gregory D.**
**Saint Paul, Minnesota 55133-3427 (US)**
• **EHLERS, Arnd**
**41453 Neuss (DE)**
• **DURDEL, Ralf**
**41453 Neuss (DE)**
• **RENVILLE, Dustin J.**
**ST. Paul, 55133-3427 (US)**

(74) Representative: **Vossius & Partner**
**Patentanwälte Rechtsanwälte mbB**
**Siebertstraße 4**
**81675 München (DE)**

(56) References cited:
**EP-A1- 0 608 918      EP-A2- 1 987 942**
**DE-A1- 102018 127 671   US-A- 5 359 532**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The invention relates to slot dies, along with assemblies, systems, and methods related thereof.

Background

Generally, slot dies include die lips that form an applicator slot. The width of the applicator slot can extend along the width of a moving web or the width of a roller that receives an extrudate, such as a film. As used herein, with respect to slot dies and components of slot dies, "a width" refers to the cross-web (or cross-roller) dimension of a slot die and its components. In this regard, an applicator slot of a slot die extends along the width of the slot die.

Slot dies are commonly used to form extrusions, coatings, and other extruded articles. As an example, slot dies can be used in slot die coatings to apply a liquid material to a moving flexible substrate or "web." There are many variations in techniques for slot die coatings. As one example, coating materials can be at room temperature or a controlled temperature. When a coating material temperature is elevated to ensure that the coating material is melted or liquefied for processing, this is often referred to as "hot melt" coating. In other examples, a coating material can include solvent diluents. Solvents can be water, organic solvents, or any suitable fluid that dissolves or disperses components of a coating. Solvents are typically removed in subsequent processing such as by drying. A coating can include single or multiple layers, and some slot dies may be used to apply multiple layers simultaneously. A coating can be a continuous coating across the width of the die or instead be comprised of strips, with each strip extending across only a portion of the width of the die and being separated from adjacent strips.

Slot dies are also used to form extrusions, including thin-film extrusions or other extrusions. In some examples, extrusions can be extrusion coatings and applied to a web substrate, a process which may be referred to as extrusion coating. In other examples, the extruded material forms a film or web directly. An extruded film might be subsequently processed by length orienting or tentering operations. As with coating, the extrudate might comprise a single layer or multiple layers.

The thickness of an extrudate, such as a film or coating, is dependent upon, among other factors, the flow rate of the extrudate through the slot die. In one example, a slot die can include an adjustable choker bar within the flow path that can be used to locally adjust the flow rate of the extrudate through the slot die to provide a desired thickness profile. A slot die can also include a flexible die lip that can be used to locally adjust a cross-sectional height of the applicator slot itself (i.e., slot height) to control the flow rate of the extrudate from the applicator slot to provide a desired thickness profile.

A slot die may include a plurality of actuators spaced along the width of the applicator slot in order to provide a desired thickness profile for an extrudate. For example, each actuator can be configured to provide a local positional adjustment of a choker bar or flexible die lip. During the course of an extrusion process using the slot die, the cross-web profile of an extrudate can be measured. Each actuator can then be individually adjusted to provide a desired thickness profile, such as a uniform thickness, for the extrudate across the width of the applicator slot.

EP 1 987 942 A2 discloses a sheet which is obtained by extruding and molding a raw material using a die with plural thickness adjusting means.

EP 608 918 A1 discloses a film thickness controller which contains a large dead time and in which, in order to solve a problem due to the dead time, past data is stored in a memory and a state variable is calculated on the basis of the stored data to control a system.

Summary

Described herein are improved methods of using a stiffness matrix and its inverse to efficiently and accurately translate actuator settings to slot die profiles and vice-versa. When using the inverse stiffness matrix to make an adjustment to the slot height at only one location, there is a tendency for the computed solution to display a phenomenon called "ringing." Ringing is an undesirable condition that occurs when neighboring actuators move in opposite directions with a large magnitude next to the location of the slot height adjustment. This occurs because neighboring actuators are physically connected to the same choker bar or flexible die lip and thus must move cooperatively. Severe ringing can cause actuators to unnecessarily reach their force and bend limits and thereby limit the degree of coating uniformity that can be achieved using this automated system.

Provided is a solution in which the controller mathematically "penalizes" actuator movements that cause ringing using a ringing constraint. Under this construct, the degree of ringing is quantified, and a solution for actuator settings that brings ringing below some value can be accepted in exchange for accepting some small deviation in the slot gap accuracy. The ringing constraint can further aid efficiency, robustness, and coating uniformity achievable using the provided control system.

In a first aspect, a method of adjusting a slot die is provided. The slot die comprises an applicator slot extending along a width of the slot die, wherein the applicator slot is in fluid communication with a fluid flow path through the slot die, at least one of a group consisting of: a choker bar and flexible die lip, and a plurality of actuators spaced along the width of the slot die, each actuator operatively coupled to the choker bar or flexible die lip to adjust a slot or choker bar height profile at its respective location to provide a local adjustment of fluid flow through the applicator slot. The method comprises: measuring thickness values of an extrudate provided from the applicator slot; mapping the measured thickness values to a corresponding position along the width of the slot die; executing a data compression of the measured thickness values to obtain a residual vector representing deviation of the measured thickness values from desired thickness values; and adjusting a position of one or more of the plurality of actuators based on the residual vector to obtain a corrected shape for the choker bar or flexible die lip, wherein said adjusting comprises using the residual vector to determine a predicted degree of ringing for a proposed set of actuator positions and then applying a ringing constraint to obtain a revised set of actuator positions that reduces the degree of ringing relative to the predicted degree of ringing.

In a second aspect, a method of adjusting a slot die is provided, the slot die comprising an applicator slot extending along a width of the slot die, wherein the applicator slot is in fluid communication with a fluid flow path through the slot die, at least one of a group consisting of: a choker bar and flexible die lip, and a plurality of actuators spaced along the width of the slot die, each actuator operatively coupled to the choker bar or flexible die lip to adjust a slot or choker bar height profile at its respective location to provide a local adjustment of fluid flow through the applicator slot, wherein the method comprises: measuring thickness values of an extrudate provided from the applicator slot; mapping the measured thickness values to a corresponding position along the width of the slot die; executing a data compression of the measured thickness values to obtain a residual vector representing deviation of the measured thickness values from desired thickness values; and adjusting a position of one or more of the plurality of actuators based on the residual vector to obtain a corrected shape for the choker bar or flexible die lip, wherein said adjusting comprises applying a slot or choker bar height constraint whereby one or more adjusted actuator positions are predicted to maintain an average current slot or choker bar height along corresponding portions of the choker bar or flexible die lip.

In a third aspect, a method of adjusting a slot die is provided, the slot die comprising an applicator slot extending along a width of the slot die, wherein the applicator slot is in fluid communication with a fluid flow path through the slot die, at least one of a group consisting of: a choker bar and flexible die lip, and a plurality of actuators spaced along the width of the slot die, each actuator operatively coupled to the choker bar or flexible die lip to adjust a slot or choker bar height profile at its respective location to provide a local adjustment of fluid flow through the applicator slot. The method comprises: measuring thickness values of an extrudate provided from the applicator slot; mapping the measured thickness values to a corresponding position along the width of the slot die; executing a data compression of the measured thickness values to obtain a residual vector representing deviation of the measured thickness values from desired thickness values; and adjusting a position of one or more of the plurality of actuators based on the residual vector to obtain a corrected shape for the choker bar or flexible die lip, wherein mapping the thickness values to a corresponding position along the width of the slot die comprises augmenting and/or adjusting measured thickness values to account for positional variance in one or more traverse edges of the extrudate.

In a fourth aspect, a process for making an extruded article is provided, the process comprising: adjusting the slot die according to one of the aforementioned methods; and extruding through the applicator slot of the slot die an extrudate based on the adjusted slot die to obtain the extruded article.

In a fifth aspect, a system is provided, comprising: a slot die including an applicator slot extending along a width of the slot die, wherein the applicator slot is in fluid communication with a fluid flow path through the slot die, at least one of a group consisting of: a choker bar and a flexible die lip, and a plurality of actuators spaced along the width of the slot die, each actuator operatively coupled to the choker bar or flexible die lip to adjust a slot or choker bar height profile at its respective location to provide a local adjustment of fluid flow through the applicator slot; and a controller configured to receive thickness values of an extrudate provided from the applicator slot, map the received thickness values to a corresponding position along the width of the slot die; execute a data compression of the received thickness values to obtain a residual vector representing deviation of the received thickness values from desired thickness values; and adjust a position of one or more of the plurality of actuators based on the residual vector to obtain a corrected shape for the choker bar or flexible die lip, wherein said adjustment comprises using the residual vector to determine a predicted degree of ringing for a proposed set of actuator positions, and then applying a ringing constraint to obtain a revised set of actuator positions that reduces the degree of ringing relative to the predicted degree of ringing.

Brief Description of the Drawings

FIG. 1 illustrates an exemplary slot die in operation, the slot die including a choker bar with a plurality of actuators, each actuator operable to adjust a slot or choker bar height profile at its respective location to provide a local adjustment of fluid flow at its location.

FIG. 2 is a top surface view of the slot die of FIG. 1.

FIG. 3 is a schematic showing an actuator assembly including a position sensor and a controller for selecting the position of the actuator assembly based on the output of the position sensor.

FIG. 4A and 4B are schematics showing exemplary processes for adjustment of a slot die.

FIG. 5 is a chart showing a ringing phenomenon observed for actuator positions resulting from a given target slot height profile.

FIG. 6 is chart showing the effect of applying a ringing constraint on an actuator setting profile.

FIG. 7 is a chart showing the deviation of actuator positions (in units) relative to datum (i.e., reference) actuator positions in an exemplary slot die.

FIG. 8 is a chart showing a calculated flexible die lip profile of the slot die of FIG. 7.

FIG. 9 is a chart showing the neutral (i.e., rest) slot height profile of the slot die of FIGS. 7-8.

FIG. 10 is a chart showing a thickness profile of a coating made using an exemplary die slot adjustment process based on the slot die configurations of FIGS. 7-9.

FIG. 11 is a chart showing a calculated die slot height profile calculated from the current actuator positions, along with datum slot and datum actuator positions.

FIG. 12 is chart showing how ringing can be affected by different methods of fitting a stiffness matrix used to determine actuator positions.

FIG. 13 is a chart showing normalized stiffness parameters for various extrusion dies.

Repeated use of reference characters in the specification and drawings is intended to represent the same or analogous features or elements of the disclosure. It should be understood that numerous other modifications and embodiments can be devised by those skilled in the art, which fall within the scope of the principles of the disclosure. The figures may not be drawn to scale.

Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises", and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

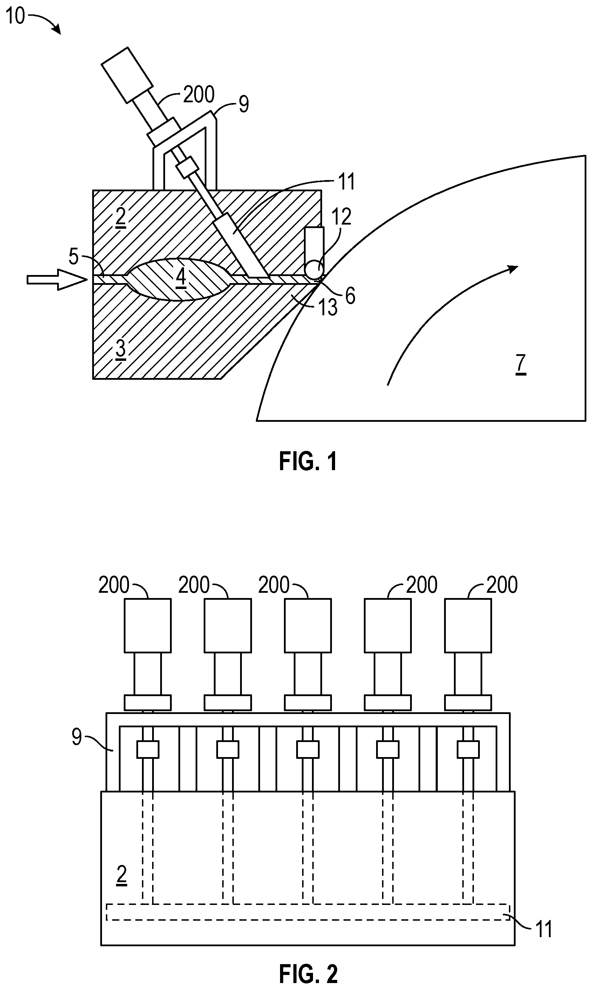

FIGS. 1 and 2 illustrate a slot die 10. Slot die 10 includes an upper die block 2 and a lower die block 3. Upper die block 2 combines with lower die block 3 to form a fluid flow path through slot die 10. The fluid flow path includes entry 5, die cavity 4 and applicator slot 6. Applicator slot 6 is between rotary rod 12, which is mounted to upper die block 2, and die lip 13 of lower die block 3. Because slot die 10 includes rotary rod 12 at its applicator slot, slot die 10 may be referred to as a rotary rod die.

Slot die 10 includes a choker bar 11 that extends across the width of the fluid flow path within slot die 10. As one example, the width of the fluid flow path within slot die 10 at choker bar 11 may be approximately the same as the width of applicator slot 6 such that choker bar 11 extends along the width of applicator slot 6. Actuator assemblies 200 are mounted on a common mounting bracket 9 and spaced along the width of slot die 10. In some example, mounting bracket 9 may be segmented, e.g., mounting bracket 9 may include separate structures for each actuator assembly 200. Each actuator assembly 200 is operable to adjust a slot or choker bar height profile at its respective location along the width of slot die 10 to provide a local adjustment of fluid flow through the applicator slot 6 by changing the position of choker bar 11 within the fluid flow path of the extrudate within slot die 10. Herein, it is to be understood that references to "slot height" in examples and illustrations can be treated equivalently to "choker bar height" in analogous slot die configurations.

During operation of slot die 10, an extrudate enters slot die 10 at fluid flow path entry 5 and continues through the fluid flow path of slot die 10, including die cavity 4 until the extrudate exits through applicator slot 6 and is applied to moving roller 7. In some embodiments, the extrudate can be applied to a moving web (not shown). In other embodiments, the extrudate can be applied directly to roller 7. Optionally, the extrudate and web can be conveyed through a series of rollers to allow the extrudate to cool.

One or more additional processes may be performed to the extrudate downstream of roller 7. Such processes include, but are not limited to, stretching, coating, texturing, printing, cutting, rolling, and laminating. In some processes, production release liners can be removed and release liners added, or one or more additional layers (such as a laminated transfer tape) can be added. Curing steps could also occur, and can be implemented by exposure to e-beam, heat, or actinic radiation, such as ultraviolet (UV) light.

As shown in FIG. 2, the slot die includes a set of actuator assemblies 200 mounted on a common mounting bracket 9. Five actuator assemblies 200 are shown, but different numbers of actuator assemblies are also possible. Each actuator assembly 200 is attached to, or otherwise engaged with, choker bar 11 and actuator assemblies 200 are spaced along a width of choker bar 11. Each of the actuators is operable to adjust a choker bar height profile at its respective location to provide a local adjustment of the position of choker bar 11 within the fluid flow path within the slot die.

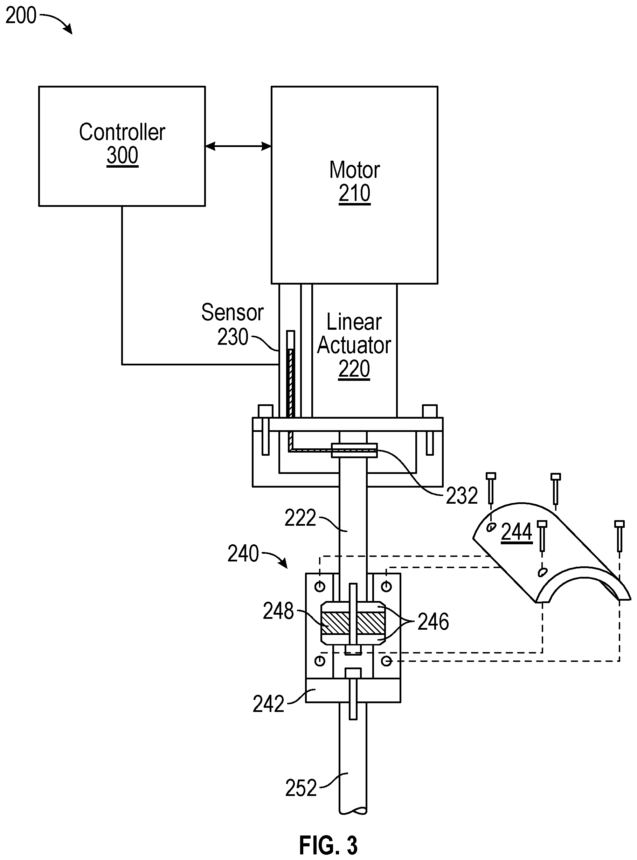

As will be discussed later with respect to FIG. 3, each of actuator assemblies 200 can include a motor that drives a linear actuator. Each of actuator assemblies 200 can also include a precision sensor, such as a linear variable differential transformer (LVDT) or a linear encoder, that detects position movements of the output shaft of the linear actuator. The output shafts of linear actuator assemblies 200 are spaced along the width of choker bar 11 such that each linear actuator assembly 200 is operable to adjust the local position of the choker bar. As discussed in further detail below, the positions of each linear actuator are individually selectable to provide a desired cross-web profile of an extrudate. In addition, the positions of linear actuator assemblies 200 can be precisely coordinated to provide a desired die cavity pressure within die cavity 4 during the operation of slot die 10 by adjusting the overall cross-sectional area of the fluid flow path adjacent to the choker bar 11 within slot die 10. In other examples, the positions of each actuator assembly 200 may be actively controlled to create an extrudate with patterned features, such as repeating or random patterned features. As referred to herein, references to the position of an actuator or actuator assembly are intended to more specifically refer to the relative positioning of the actuator output shaft.

Variants of slot die 10 are also possible, in which the actuator assemblies are engaged to a flexible die lip or rotary rod instead of a choker bar. Actuator assemblies may also be present to adjust the cross-sectional area of the fluid flow path from opposing sides of the applicator slot. In these embodiments, various combinations are possible; for instance, a rotary rod die could be configured with both a choker bar and flexible die lip, each being capable of precise adjustment through a plurality of actuators spaced along the width of the rotary rod die.

FIG. 3 illustrates an assembly including an individual actuator assembly 200, zero-backlash coupler 240 and controller 300. As shown in FIGS. 1 and 2, actuator assembly 200 may be used in a slot die to provide a local adjustment of a fluid flow path of the slot die, e.g., by adjusting the height of a fluid flow path within the slot die as with slot die 10.

Actuator assembly 200 includes motor 210, linear actuator 220, which is coupled to motor 210, and position sensor 230. As one example, motor 210 may be a stepper motor. The output shaft (not shown) of motor 210 is mechanically coupled to linear actuator 220. Sensor 230 senses the position of linear actuator 220. For example, sensor 230 may be a LVDT sensor or a linear encoder. Sensor 230 is secured to output shaft 222 of linear actuator 220 with clamp 232 and precisely measures the relative position of output shaft 222 of linear actuator 220. In other examples, the sensor 230 might measure the zero-backlash coupler 240, die actuator linkage 252, flexible die lip 13, rotary rod 12, or choker bar 11. Actuator assemblies that are suitable for use as actuator assemblies 200 are available from Honeywell International Incorporated of Morristown, New Jersey.

Controller 300 is commonly a dedicated computer, and receives position inputs from both motor 210 and sensor 230. For example, motor 210 may be a stepper motor and may provide an indication of the number of "steps" the stepper motor has taken from a known reference position of the stepper motor. Sensor 230 may provide more precise position information to controller 300 than that provided by the motor 210. Controller 300 provides instructions to motor 210 to drive output shaft 222 of actuator 220 to a preselected position. For example, controller 300 may monitor the position output shaft 222 of actuator 220 with sensor 230 while operating motor 210 in order to position output shaft 222 of actuator 220 according to a preselected position. In some examples, controller 300 may control a set of actuator assemblies 200, either simultaneously or sequentially. For example, controller 300 can control each of the actuator assemblies 200 in slot die 10 shown in FIG. 2.

In slot die 10, output shaft 222 of actuator 220 can be advantageously connected to die actuator linkage 252 by zero-backlash coupler 240. Zero backlash coupler 240, in this example, includes two halves that screw together, bottom half 242 and top half 244. Bottom half 242 is directly attached to die actuator linkage 252 with a screw. In addition, zero backlash coupler 240 includes a stacked protrusion assembly that bolts onto the end of output shaft 222 of actuator 220.

The stacked protrusion assembly includes two metallic discs 246 surrounding an insulative disc 248. As one example, insulative disc 248 may comprise a ceramic material. Bottom half 242 and top half 244 combine to encircle the stacked protrusion assembly, including metallic discs 246 and insulative disc 248, bolted onto the end of output shaft 222 of actuator 220. Once top half 244 is securely screwed to bottom half 242, output shaft 222 of actuator 220 is effectively connected to zero-backlash coupler 240 and die actuator linkage 252.

Zero-backlash coupler 240 functions to thermally isolate actuator assembly 200 from the slot die. In particular, insulative disc 248 significantly limits the metal-to-metal contact path between output shaft 222 of actuator 220 and die actuator linkage 252. This helps protect actuator assembly 200 from the damaging heat of a slot die. For example, slot dies commonly operate at temperatures in excess of 300°F (149°C), whereas the components of actuator assembly 200, including motor 210 and sensor 230 may experience limited functionality or even permanent damage when subjected to temperatures to in excess of 130°F (54°C). For this reason, zero-backlash coupler 240 may function to keep the temperature of actuator assembly 200 at 130°F (54°C) or less. In some examples, metallic discs 246 may also be formed from nonmetallic materials such that there is no metal-to-metal contact between output shaft 222 of actuator 220 and die actuator linkage 252. Such features can further thermally isolate actuator assembly 200 from the slot die housing.

While not fully articulated here, actuator assembly 200 can include further options and advantages, as described elsewhere in U.S. Patent Nos. 9,044,894 (Loukusa, et al.), 9,216,535 (Trice et al.) 9,579,684 (Yapel, et al.), and 9,744,708 (Loukusa et al.).

Alternative actuator mechanisms are possible. In other embodiments, the actuator mechanisms include one or more of the following: thermally adjustable bolts, differential bolts, piezo-electric actuators, pneumatic actuators; and/or hydraulic actuators. In one embodiment, the actuator mechanism includes thermally-adjustable bolts and the technique for retrofitting a slot die with thermally-adjustable bolts may include evaluating the cross-web profile of the extrudate after it exits the applicator slot and adjusting the relative position of one or more of the actuator mechanisms with its respective thermally-adjustable bolt such that the cross-web profile of the extrudate after it exits the applicator slot more closely conforms to a preselected cross-web profile.

In an exemplary actuator mechanism, the applicator slot can be adjusted by applying a pressing load or tensile load to a flexible die lip using a lever supported by a rotating shaft as a fulcrum, along with an operating rod displaced in an axial direction by the body of the slot die. Rotational force of the lever can be converted into a force along an axial direction of the operating rod, and the force in the axial direction becomes a pressing load or a tensile load exerted on the flexible die lip. The lever directly can apply a force to the operating rod at the point of action of the lever.

In another example, thermally adjustable bolts automatically regulate the applicator slot using a plurality of adjusting pins, coupled to respective thermoelements disposed on a flexible die lip. The thermoelements can be controllable by the controller in to adjust the applicator slot through the action of mechanical force applied to the flexible die lip by the corresponding adjusting pin through expansion or contraction of the thermoelements. As a further option, the actuator mechanism can include providing at least two adjusting pins and/or thermoelements that are simultaneously adjusted.

Further aspects of the foregoing, along with other variants, are described in U.S. Patent No. 9,700,911 (Nakano) and PCT Patent Publication No. WO 2019/219724 (Colell et al.).

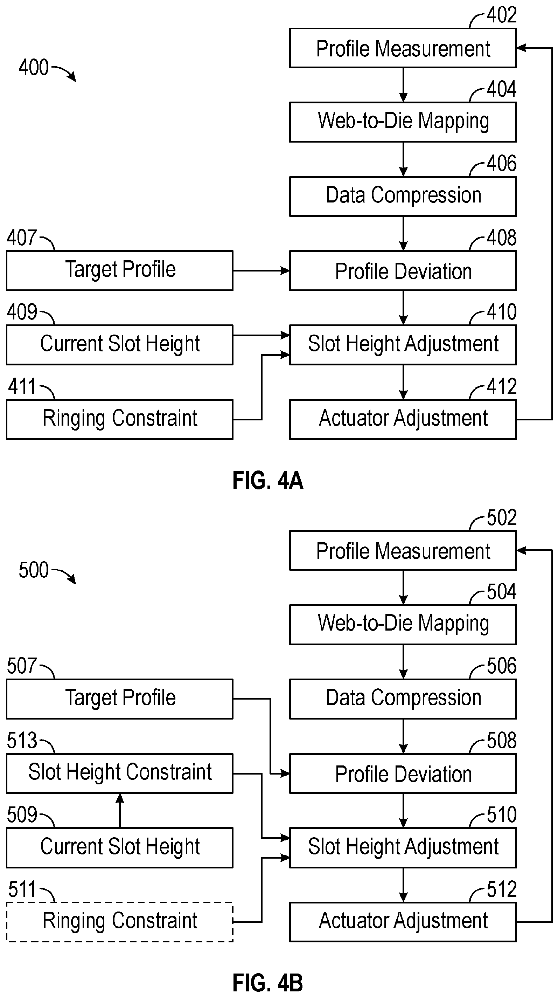

FIG. 4A is a flowchart illustrating an exemplary workflow 400 for progressively adjusting the position of each actuator in a plurality of actuators of a slot die in an extrusion process to achieve a target extrudate thickness profile. While not intended to be limiting, the workflow 400 is described with respect to slot die 10 (FIGS. 1 and 2), actuator assembly 200 (FIG. 3) and controller 300 (FIG. 3) during an extrusion operation. In various examples, the techniques described can also be utilized for strip coating, a film slot die, a multilayer slot die, a hot melt extrusion coating die, a drop die, a rotary rod die, an adhesive slot die, a solvent coating slot die, a water-based coating die, a slot fed knife die, an extrusion replication die, a vacuum contact die, or other slot die.

An initial step in workflow 400 is providing a Profile Measurement (block 402) on the extrudate obtained from the applicator slot of the slot die. Known measurement techniques include use of a beta gauge. A beta gauge measures the normalized mass of a web by transmitting through the web radiation emitted from a radioisotope source (e.g., based on promethium, krypton, or strontium) and detecting the resulting attenuation of beta particles. The measurement footprint of a beta gauge is small, so profile measurements are made at various locations across the width of the web and tracked over time to account for time differences amongst measurements taken along the web. The complete profile measurement can require the averaging of several scans (potentially, six scans or more) to have statistical significance.

Alternative gauging methods are also available, including those based on UV fluorescence, direct thickness measurement such as laser triangulation, reflective methods such as gamma backscattering, and capacitance-based caliper (i.e., web thickness) sensing. Some of these methods are capable of capturing a web thickness profile over the entire width of the web at one time. It was determined that applying the workflow 400 described herein while measuring the coating thickness along its entire width at one time can provide a 4-fold to 12-fold improvement in cycle time compared to a workflow that uses a conventional scan-based gauging method.

Data from the Profile Measurement generally includes a large number of discrete measurements for each cross-web scan. The measurement system may process the raw discrete measurements into a smaller number of data values, i.e. essentially utilizing a form of cross-web and down-web averaging as defined by Equation 1 below:

$$M_i = \frac{1}{\Delta x \Delta z} \sum_{jk} t_{jk} \text{ (Equation 1)}$$

where the coarse-grained measured values, $M_i$, represent an average value over a certain cross-web zone, $\Delta x$, and a down-web distance $\Delta z$, $t$ represents a thickness measurement within that cross-web zone, $\Delta x$, and a down-web distance $\Delta z$, and $j$ and $k$ are matrix indices along cross-web and down-web directions, respectively.

The provided techniques can be used for both continuous full web coated extrudates and stripe-coated extrudates. In a full-web coating, the multitude of measured values represent the entire coated width. In the case of stripe coating, measured thickness values corresponding to a plurality of coated regions spaced apart each other along a cross-web direction, such that the measured values only cover the coated stripes and not the uncoated lanes in-between.

Referring back to FIG. 4A, the next step is to perform a Web-to-Die Mapping (block 404) of these profile measurements. Certain assumptions can be made when mapping the gauge measurement to the die. First, it can be assumed that the data received from the profile measurements are taken from edge-to-edge, since modern gauging systems have edge detection. Second, it is assumed that gauge data directly corresponds to actual extrudate weights/thicknesses. If the web is disposed on a release liner, it is assumed that the Basis Weight of the release liner is subtracted, and the data represents the coating weight only. Finally, it is assumed for simplicity that there is symmetrical neck-in from both edges of the extruded web.

The number and location of the coarse-grained measurement values may be different from that of the die lip actuators, and so, a general method of mapping the measurement values to actuator locations is desired. Film neck-in calculations can consider the effects of different flow rates, draw distances, and web speeds. In one embodiment, coated web coordinates in physical units (e.g., millimeters) are mapped to the coordinates in cross-web units, (e.g., in a simple actuator coordinate, Actuator #1 has a coordinate of 1, Actuator #2 has a coordinate of 2, and so forth). This process enables mapping from a coating measurement array number to a physical coated web position, and then through the web-to-die mapping function to a physical die position. Here, the coating measurement array can represent, for example, the most recent array of thickness measurements generated each time a scanner traverses the moving web.

It is also possible for the process to be flipped (i.e., a die-to-web mapping) such that it includes similar steps in reverse order. Instead of a direct mapping, the reverse procedure could include an interpolation of the coating measurement array. That is, a direct mapping of the die actuator locations to the corresponding position on the coated web (through the die-to-web mapping function-the inverse of the web-to-die mapping function), followed by interpolation (low order polynomial interpolation such as Hermite cubic polynomials, which features continuous function and first derivative) of this direct mapping for the actual measurement array values.

In cases where the mapping function evaluations, either web-to-die or die-to-web, are computationally inefficient or impractical, then the reverse procedure can be preferred, as it tends to enable a significantly faster response time. In addition, it can be useful to simplify the mapping by avoiding use of physical coordinates altogether. The simplest mapping may be from die actuator coordinate directly to coating measurement array coordinate (coated web coordinate based on relative location compared to the measurement array number). This logical extension is likely to be the most computationally efficient (e.g., using cubic polynomial interpolation), but transparency of understanding may suffer since no physical coordinate system is involved.

With a suitable die-to-web or web-to-die mapping function, it may be advantageous to utilize the function elsewhere in the profile control scheme. For example, the mapping could incorporate cross-web variation in the control parameters, such as controller gain or actuator interaction through the coating bead flow field. This could be done in an ad-hoc fashion based on production experience or in a more scientifically-based manner using fluid mechanical models of the coating bead flow field.

In some embodiments, this mapping incorporates any scan-location-to-die-bolt-location mapping already built into the measurement system. Various commercial systems are capable of performing web-to-die mapping, such as profile control solutions from NDC Infrared Engineering Inc., Irwindale, CA.

Following the web-to-die mapping step, profile control strategies proceed with a Data Compression step (block 406), sometimes also referred to as coarse-graining step. Ordinarily the coating measurement array will contain many more elements than there are lip actuators (500-1000 measurement elements compared to 20-40 actuators). Advantageously, the Data Compression (block 406) can improve computing efficiency and provide faster responsiveness of the controller in processing multidimensional profile data, particularly in cases involving complex mechanical and fluid-dynamic interactions. Data compression is sometimes referred to as "coarse-graining" since small scale variations can be converted to a scale of variation that the actuators can influence.

Once the actuator zones and measurement zones are defined along a common coordinate system (generally corresponding to the die location), conversion between the two can be carried out using various methods.

One method is based on use of an overlap matrix *OL*, defined according to Equation 2:

$$OL_{ij} = \int_{-0.5}^{x_{act}-0.5} S(a, A_i, w_i^a) S(a, G_j, w_j^s) \, da$$

$$S(a, x, l) = 1 \ \ if \ \ x - \frac{l}{2} \le a \le x + \frac{l}{2}, \ otherwise \ 0$$

(Equation 2)

, where $S(a,x,l)$ is a square wave function dependent on cross-web coordinate $a$, zone location $x$, and zone width $l$. In the notation above, $A_i$ is the cross-web coordinate of the $i^{th}$ actuator zone, $G_j$ is the cross-web coordinate of the $j^{th}$ measurement zone, and $w_i^a$ and $w_j^s$ are the widths of actuator- and scan-based zones, respectively, as defined along the cross-web coordinate.

This overlap matrix represents a convolution of the actuator zone of influence with the measurement zone. This rectangular matrix contains one row for each actuator and one column for each measurement value. The coordinate system used above (i.e., the coordinate $a$) can be based on actuator number, where the actuators are numbered from 0 to $N_{act}$-1, where $N_{act}$ is the total number of actuators. The width between the actuators would be unity (i.e., 1) in this coordinate system, with the influence zone of each actuator extending ½ of the actuator spacing in both cross-web directions from its location. That is, the zone for actuator $j$ runs from $j$-1/2 to $j$+1/2. This is represented by the Square function defined above, $S(a,j,1)$ for actuator j. Similarly, each measurement value has a zone associated with it which would normally be the cross-web zone, $D_x$, of data points that constitute its value, defined by $S(a,M_i,D_x)$.

When coating stripes, $D_x$ can represent the width of the stripe associated with the measurement value. In a full-width coating, $D_x$ can represent the entire cross-web width of the coating. Applying Equation 2 above to an exemplary stripe coating, the actuator zone width, $w_i^a$, could be 1 and $w_j^s$ could be the respective stripe width. In either case, the measurement value, $M_j$, is referenced to the cross-web coordinate $a$, and so, incorporates any location mapping inherent to the measurement system.

By computing the overlap matrix above for a stripe or full-width coating, a general method of transforming measurement values to values associated with individual actuators can be realized. For example, a given array of measurement values $M^s$ can be simply multiplied by the overlap matrix to create an actuator-associated array $M^a$ according to Equation 3 below:

$$M_i^a = \sum_j OL_{ij} M_j^s$$

(Equation 3)

In the equation above, the superscript a is directed to actuator-based values while the superscript s is directed to scan-based values.

Alternative methods are also possible. For instance, interpolation and extrapolation methods can be used to account for actuator zone of influence with the measurement zone. As an example, a spline interpolation method could be used to map measurements to individual actuators.

Table 1 (next page) demonstrates how the stripe location and coating thickness can be converted between stripe and actuator locations using two different methods. Here, the 3rd column represents measured coating thickness, with the last column showing the Overlap Matrix mapped data. This chart shows the Overlap Matrix mapping of coating thickness to each actuator location. The 5th column shows spline-interpolated values. These do not exactly match the Overlap Matrix values, reflecting the fact that these values were mapped using two different methods.

In some embodiments, mapping the thickness values to a corresponding position along the width of the slot die comprises augmenting and/or adjusting the measured thickness values to account for positional variance in one or more traverse edges of the extrudate. Transverse edges can include not only the overall leftmost and rightmost edges of the extrudate but also the localized edges in a stripe coating extrusion process.

One implementation applies when a gauging system, using automatic edge detection, records non-physical input data as a result of the coating being absent during at least some portion of the extrusion process. This lack of a detectable coating tends to happen when the coating edge migrates leftward or rightward over time, causing some positions to record one or more "zero" thickness values. To avoid averaging these zeros with real thickness values, any zero values can be automatically replaced with the last known thickness value reported by the nearest neighboring gauging sensor.

Another implementation applies when there is significant die neck-in, a phenomenon that tends to occur when there is a long draw zone after the extrudate exits the slot die. In these instances, the web-to-die mapping can be performed according to a mapping function that not only re-distributes thickness values to reflect the reduction in transverse width, but also supplements measured thickness values with interpolated values. Augmentation to include these interpolated thickness values can ensure that there is a sufficient resolution of thickness measurements along the transverse direction, thereby enabling meaningful extrudate thickness data to be provided for each actuator zone. Such augmentation can take many forms, including linear interpolation, a trapezoidal mapping routine, spline interpolation, or even a uniform duplication of thickness measurements across the width of the measurement zone.

TABLE 1.

| Stripe number | Stripe center location (centimeters) | Stripe width (centimeters) | Coating thickness (micrometers) | Actuator number | Actuator position at stripe center (centimeters) | Spline-interpolated coating thickness (micrometers) | Overlap Matrix-mapped coating thickness (micrometers) |
|---|---|---|---|---|---|---|---|
| 1 | 5.20 | 3.355 | 940.05 | 1 | 2.54 | 947.50 | 940.05 |
| 2 | 13.34 | 5.466 | 940.05 | 2 | 8.89 | 930.88 | 940.05 |
| 3 | 22.52 | 5.466 | 1019.56 | 3 | 15.24 | 955.50 | 940.05 |
| 4 | 31.71 | 5.466 | 970.03 | 4 | 21.59 | 1015.67 | 1019.56 |
| 5 | 40.90 | 5.466 | 935.48 | 5 | 27.94 | 1000.91 | 978.66 |
| 6 | 50.09 | 5.466 | 965.20 | 6 | 34.29 | 952.80 | 970.03 |
| 7 | 59.28 | 5.466 | 973.84 | 7 | 40.64 | 935.36 | 935.48 |
| 8 | 68.47 | 5.466 | 940.56 | 8 | 46.99 | 952.63 | 965.20 |
| 9 | 77.66 | 5.466 | 976.88 | 9 | 53.34 | 975.06 | 965.20 |
| 10 | 86.85 | 5.466 | 948.69 | 10 | 59.69 | 972.49 | 973.84 |
| 11 | 96.04 | 5.466 | 902.97 | 11 | 66.04 | 944.17 | 940.56 |
| 12 | 105.23 | 5.466 | 903.48 | 12 | 72.39 | 953.57 | 949.71 |
| 13 | 114.42 | 5.466 | 963.17 | 13 | 78.74 | 978.05 | 951.48 |
| 14 | 123.61 | 5.466 | 934.97 | 14 | 85.09 | 958.37 | 948.69 |
| 15 | 132.80 | 5.466 | 965.96 | 15 | 91.44 | 923.65 | 925.58 |
| 16 | 141.99 | 5.466 | 984.25 | 16 | 97.79 | 897.36 | 902.97 |
| 17 | 151.18 | 5.466 | 1003.58 | 17 | 104.14 | 898.40 | 903.48 |
| 18 | 159.32 | 3.355 | 930.40 | 18 | 110.49 | 943.13 | 948.94 |
| | | | | 19 | 116.84 | 960.73 | 963.17 |
| | | | | 20 | 123.19 | 935.56 | 934.97 |
| | | | | 21 | 129.54 | 951.48 | 965.96 |
| | | | | 22 | 135.89 | 973.51 | 965.96 |
| | | | | 23 | 142.24 | 985.01 | 984.25 |
| | | | | 24 | 148.59 | 1005.69 | 1003.55 |
| | | | | 25 | 154.94 | 978.71 | 983.23 |
| | | | | 26 | 161.29 | 907.29 | 930.40 |

The degree of augmentation can be determined based on a calculation of the minimum gauge data resolution for a given extrusion process. This effective gauge resolution can be determined, for example, based on the degree of neck-in, the mapping function, and the width of the actuator zones used. It is generally preferred to have at least two thickness measurements, and more preferably three or more thickness measurements, per actuator zone.

The workflow 400 then proceeds to obtain a Profile Deviation (block 408). One simple technique uses a square wave convolution with the difference between the coating weight measurement and the desired coating weight. The square wave has a value of 1 within a ½ actuator spacing on either side of the actuator location and has a value of 0 elsewhere. The width between the actuators is defined as unity (or 1) in this coordinate system. This difference can be represented as a set of residual values $R_i$ that can be computed for each Actuator i according to Equation 4 below:

$$R_i = \int Sq[A_i](t_{measured} - t_{desired})dX \qquad \text{(Equation 4)}$$

, where $S$ is a generalized square wave function centered around cross-web coordinate $A_i$ and $t_{measured}$ and $t_{desired}$ represent measured and desired coating weights, respectively. According to Equation 4, the Data Compression combines knowledge of the measured extrudate thickness at the die with input regarding a desired cross-web profile for extrudate thickness, defining a Target Profile (block 407), to obtain a Profile Deviation (block 408). The residual vector $R$ thus represents a measure of how the current coating weight measurements deviate from the Target Profile (block 407) at each actuator position.

The Target Profile (block 407) can be manually set by an operator or may be automatically set by the controller according to a control algorithm for the application at hand. In some applications, a flat profile is desired, but there are situations where other profiles are preferred. For example, a "dog-bone" shaped target profile might be desired to control edge instabilities in the extrusion process, such as those relating to draw resonance or edge scalloping.

While aforementioned square wave convolution is simple to implement, it does not account for several important aspects of the flow field physics. For example, there is no interaction between the residual vector elements and neighboring actuators whereas from a flow field standpoint there can be a wide influence zone. Commonly, the movement of a single actuator influences the flow field globally through relative flow rates and in other instances locally in the vicinity of each actuator.

The strength and range of actuator interactions can be affected by various factors, including slot die geometry and structure, materials of construction, coating liquid, coating method, and coating bead flow. One way to capture actuator interactions in the data compression step is to construct the residual vector using a flow sensitivity convolution, in which $\partial t_{measured}/\partial DH_i$ denotes flow sensitivity-the sensitivity of coating weight $t$ (extrudate thickness) to a change in slot height $(DH)$, as shown in Equation 5:

$$R_i = \int \frac{\partial t_{measured}}{\partial \Delta H_i}(t_{measured} - t_{desired})dX \qquad \text{(Equation 5)}$$

In this construct, each residual vector element represents the sensitivity of that part of the coating weight profile to slot height at a cross-web position of a particular actuator.

As an alternative approach, the residual vector could be provided from a filtering viewpoint, such as based on a Fourier or Wavelet transform. In that view, the residual vector contains particular modes that when removed from coating profile will lead to the desired thickness profile. For example, a wavelet transform with two parameters, wavelet location $a$ and scale $\sigma$, is provided in Equation 6 below:

$$R_i = \Psi^i(a, \sigma) = \int \psi^i(a, \sigma)(t_{measured} - t_{desired})dX \text{ (Equation 6)}$$

While the flow sensitivity and wavelet transform convolution can be quite different, it was surprisingly discovered that the thickness sensitivity to actuator movement can be closely represented by a wavelet function for extrusion dies. The Ricker Wavelet (sometimes referred to as the "Mexican Hat Wavelet" due to its shape) in particular provides a very close approximation to the thickness sensitivity to actuator movement for actuators not adjacent to the lateral edges of the slot die.

The shape of the Ricker Wavelet provides a unique technical benefit, as it extends both above and below the x-axis in such a way that the overall wavelet has an overall integrated area of zero. This shape can accurately simulate, for certain slot dies, the depletion of fluid flow occurring at neighboring actuator positions when fluid flow is increased at a given actuator position.

Wavelet transforms can be potentially more useful than Fourier transforms as the former provides more localized information. Fourier transforms typically extract only frequency information whereas wavelet transforms extract both the wavelet scale (similar to wavelength) and location. But in the case of controlling a choker bar or flexible die lip with actuators, particular wavelet transforms are particularly useful in guiding adjustments near to the actuators and at the same general scale as the magnitude of actuator adjustments. Advantageously, this is an efficient representation because the wavelet only captures the portion of the thickness profile that the actuator can mediate.

In an exemplary workflow, the wavelet location for a given actuator is centered at the actuator and the wavelet scale is based on computed flow/actuator sensitivities, both of which are used in transforming slot height profile data.

Referring back to FIG. 4A, once residual vector $R$ has been determined, an appropriate Slot Height Adjustment can then be determined (block 410). When predicting the adjustment to the plurality of actuators engaged to the flexible die lip or choker bar suitable to achieve the Target Profile (block 407), it is advantageous to apply a pressure die deflection model that enables the effects of fluid flow through the die to be decoupled from mechanical effects relating to the slot die in absence of fluid flow. A suitable model can predict the pressure profile across the applicator slot and corresponding amount of pressure deflection in the flexible die lip or choker bar. In some cases, it can be possible to empirically measure this pressure-based deflection (i.e., Pressure Deflection D).

The pressure deflection can be accounted for by adding it to a calculated slot height, and the sum compared with a pressure-compensated slot height profile from the Current Slot Height (block 409), which includes pressure deflection due to fluid flowing through the applicator slot. Then, assuming that any change in the amount of deflection D (i.e., DD) is small, then the deflection D solely attributable to the fluid can be subtracted from the pressure-compensated slot height profile (H+D) to obtain the zero-pressure slot height profile (H), thereby providing a nexus to calculating the target actuator positions.

In an exemplary method, the pressure die deflection model is based on the local dependence of the coating thickness to slot height. This can be modeled by deriving a Taylor's series around the current slot height. Assuming there is only a small perturbation from the setpoint, only the linear term need be retained, as shown in Equation 7:

$$t(X) = t_0 + \left.\frac{\partial t}{\partial \Delta H}\right|_{\Delta H=0} \Delta H \qquad \text{(Equation 7)}$$

If many small profile corrections are taken, this linearized form can be sufficient. In the interests of rapid control, however, large profile corrections are needed. Unfortunately, use of the linearized form in these cases can lead to unstable control.

In one embodiment, a non-linear control scheme can be instituted in a non-interacting context. For each actuator, adjustments are made to slot height according to Equation 8:

$$\Delta H = (H_0 + D)\left[\left(\frac{\tilde{t}_d}{\tilde{t}_0}\right)^{\frac{1}{E}} - 1\right] \qquad \text{(Equation 8)}$$

, where $\Delta H$ is a change in slot height, $H_0$ is a current slot height, $\tilde{t}_d$ is a target coating thickness, and $\tilde{t}_0$ is a current coating thickness, and E is an exponent relating to the power law index of the fluid.

Equation 8 still requires a prediction of D, or die deflection, across the coating die width. This could be obtained using Equation 8A:

$$D = K_0\left(1 + K_1 x^2 + K_2 x^4 + K_3 x^6\right)P \qquad \text{(Equation 8A)}$$

, where $K_1$, $K_2$, and $K_3$ are polynomial coefficients, $P$ is internal die cavity pressure, and $x$ is cross-web position along the applicator slot as measured from the die center.

Through Equation 8A, the pressure die deflection model considers the effect of die cavity pressure, but Equation 8A is predicated on certain assumptions. For example, lip deflection is assumed to be approximately symmetric about the die center-line and well-approximated with low-order polynomial. The polynomial coefficients can be provided by calculation and/or measurement. Deflection of the flexible die lip or choker bar can also be assumed to be proportional to the die cavity pressure. This assumption is generally well-justified if P is the actual die cavity pressure, but if P is measured significantly upstream of the die, for instance at a feed hose or compounder outlet, modifications may be warranted. Further, it is acknowledged that all dies would not necessarily deflect symmetrically (for example an end fed die might not), so a different appropriate correlation model of die deflection would be used in those instances.

In one embodiment for a flexible die lip configuration, deflection of the die is characterized using an array of measurement indicators that detects deflection of both a fixed die lip side and flexible die lip side. Alternatively, a taper gauge can be used to measure directly the die slot height under multiple conditions: (1) with flow & pressure, (2) no flow and no Pressure, where D is calculated by subtracting slot height (2) from slot height (1).

Advantageously, the non-linear character of this scheme allows rapid control using relatively large corrections without encountering unstable control. But the number of control steps could be reduced further by also incorporating interactions between the actuators that are transmitted through the flow field.

In a preferred embodiment, the thickness sensitivity represented by the wavelet function in Equation 6 above can be used and combined with the previous non-linear functional form, providing a non-linear, interacting form of the coating thickness as shown in Equation 9:

$$t(X) = t_0 + \psi^i(X) \, t_0 \left[ \left(1 + \frac{\Delta H}{H_0 + D}\right)^E - 1 \right] \quad \text{(Equation 9)}$$

In the ordinary Newton-Raphson context, actuator position updates proceed with the solution of the following matrix equation which incorporates flow field actuator interactions, as reflected in Equation 10:

$$\int \psi^i \psi^j dX \bullet t_m^0 \left[ \left(1 + \frac{\Delta H_j}{H_0 + D}\right)^E - 1 \right] = \int \psi^i (t_d - t_m^0) dX \quad \text{(Equation 10)}$$

This is essentially equivalent to the non-linear, non-interacting form above, except that the wavelet transform convolution is being pre-conditioned by a fluid flow interaction matrix as shown in Equation 11:

$$t_0 \left[ \left(1 + \frac{\Delta H_j}{H_0 + D}\right)^E - 1 \right] = \left( \int \psi^i \psi^j dX \right)^{-1} \bullet \int \psi^i (t_d - t_m^0) dX \quad \text{(Equation 11)}$$

In its final form, actuator updates can proceed to obtain slot height adjustments according to Equation 12:

$$\Delta H_j = (H_0 + D) \left\{ \left[ 1 + \frac{1}{t_m^0} \left( \int \psi^i \psi^j dX \right)^{-1} \bullet \int \psi^i (t_d - t_m^0) dX \right]^{\frac{1}{E}} - 1 \right\} \quad \text{(Equation 12)}$$

In order to complete the dependence of this profile control algorithm on actual fluid hydrodynamics, the exponent E should accurately reflect the thickness sensitivity to slot height changes. Manifold flow calculations afforded by commercially-available computational software can obtain this information. Calculations of flow sensitivity for different magnitudes of gap changes can be used to determine the most physically relevant exponent E. This can be obtained by measuring coating thickness over a range of different slot heights and applying the general power-law fluid relationship of Equation 12A:

$$\frac{t_1}{t_0} \propto \left( \frac{h_1}{h_0} \right)^E \quad \text{(Equation 12A)}$$

, where for a given actuator position, $h_1$ and $t_1$ are respective slot height and coating thickness following a small perturbation (or "bump") to slot height, and $h_0$ and $t_0$ are respective slot height and coating thickness prior to the small perturbation (or "bump") to slot height (note that these do not represent the slot height and coating thickness changes resulting from the workflow 400).

The exponent E can be estimated using a curve fitting method based on the relationship of Equation 8, which can be re-expressed as shown below in Equation 12B:

$$\frac{t_{new}}{t_{old}} = \left( \frac{h_{new} + D}{h_{old} + D} \right)^E \quad \text{(Equation 12B)}$$

The curve-fitting examples show that different slot dies can behave differently, yielding different exponents. In this way, the profile control algorithm can be customized to perform optimally depending on the die design and mode of use.

An appropriate Slot Height Adjustment (block 410) is then determined, given the knowledge of the Profile Deviation (block 408) obtained above and the Current Slot Height (block 409). Here, the Current Slot Height (block 409) incorporates both the original slot height profile (with no pressure correction) and pressure correction to create the pressure-corrected slot profile. The Slot Height Adjustment (block 410) entails application of Equations 8 and 12 and subtraction of the pressure correction to determine a predicted zero-pressure slot height profile corresponding to the Current Slot Height (block 409).

With the zero-pressure slot height profile obtained above, the controller 300 can then predict a set of discrete actuator settings suitable to achieve the desired slot height profile. In a preferred embodiment, this set of discrete actuator settings is based on a plurality of actuator settings corresponding to a pre-selected cross-web profile. As will be described below, the plurality of discrete actuator settings can be determined for a series pre-selected cross-web profiles, thereby providing a predictive model later used to determine an Actuator Adjustment (block 412).

In various embodiments, controller 300 may retrieve the preselected cross-web profile from a non-transitory computer readable medium or may receive the preselected cross-web profile from a user input.

In a preferred embodiment, the prediction of the discrete settings from the plurality of discrete settings and/or the zero-pressure Current Slot Height (block 409) can be obtained through a mathematical construct called a stiffness matrix.

The stiffness matrix transforms actuator position profiles to slot height profiles, where the slot height profiles exclude effects of deflection attributable to fluid flow through the applicator slot. Whether the adjustable gap is the final die slot or the choker bar slot, a knife coater, or other, a slot height profile can be determined by empirical measurement at a multitude of cross-web positions, represented by Equation 13.

$$h_i \equiv h(x_i), \text{ with } i \text{ ranging from } 1 \text{ to } N_m \qquad \text{(Equation 13)}$$

, where $h_i$ is slot height at the location of Actuator $i$, $x_i$ is a cross-web coordinate, and $N_m$ is the number of measurement points.

The value of the slot height at these measurement points depends upon the positions of the die lip actuators. In general, the functional form of this dependence can be represented by the Taylor Series of Equation 14:

$$h(A) = h_0(A_0) + \frac{\partial h}{\partial A}\bigg|_{A_0} \bullet (A - A_0) + (A - A_0) \bullet \frac{\partial^2 h}{\partial A^2}\bigg|_{A_0} \bullet (A - A_0) + \cdots \quad \text{(Equation 14)}$$

, where $h$ is a vector of slot height measurements, $A$ is a vector of actuator settings (in actuator units), and $h_0$ and $A_0$ refer to an initial set of slot height measurements and actuator settings, respectively. The length of vector $h$ would be $N_m$, with the length of vector $A$ being the total number of actuators, $N_a$. In some instances, the actuator units are essentially equivalent to actual displacements (e.g., 1 actuator unit = 0.2 micrometers).

Stiffness matrix $K$ is defined as $\frac{\partial \mathbf{h}}{\partial \mathbf{A}}$ above, a rank 2 $N_m \times N_a$ matrix, while the Hessian matrix, $\frac{\partial^2 h}{\partial A^2}$, is a rank 3 $N_a \times N_m \times N_a$ matrix. In some examples, the range of lip movement is generally within the range governed by linear elasticity such that that the Hessian matrix components and contributions from higher order terms are virtually zero. As a result, changes in the slot height due to actuator position changes can be closely represented by the stiffness matrix alone, as represented by Equation 15.

$$(h - h_0) = \frac{\partial h}{\partial A} \bullet (A - A_0) \qquad \text{(Equation 15)}$$

The stiffness matrix $K$ has $N_m \times N_a$ components and physically represents the change in the slot height at the measurement point, $x_i$, due to a change in the $j^{th}$ actuator position, $A_j$. If the die lip was infinitely flexible, almost all of the stiffness matrix components would be zero-only where the actuator position coincides with the measurement point would the stiffness matrix component be non-zero. If the measurement points are at the same locations as the actuators, in this scenario the stiffness matrix becomes diagonal, as represented by Equation 16.

$$K \equiv \frac{\partial h}{\partial A} = kI = k\delta_{ij} \qquad \text{(Equation 16)}$$

, where $I$ is the identity matrix, $k$ is a proportionality constant that converts actuator position changes to slot height changes and is the same for each actuator, and $\delta_{ij}$ is the Kronecker delta.

In practice, die lips and choker bars are not infinitely flexible and a change in an individual actuator changes the slot height in a region around the actuator location. How far this region of influence extends is reflected in how far from the diagonal nonzero components appear in the stiffness matrix. In this way, the lip stiffness matrix incorporates in its components all interactions between actuator movements and slot height changes across the entire width of the die.

Empirically measuring the stiffness matrix of a die lip can be accomplished by finite differencing. The difference between slot height measurements across the die slot width when each actuator is independently displaced provides the rows of the stiffness matrix. For example, centered differencing would proceed as shown in Equation 17:

$$K_{ij} \cong \frac{h_i(A_0 + \Delta_j) - h_i(A_0 - \Delta_j)}{2\Delta_j} \qquad \text{(Equation 17)}$$

In Equation 17, $\Delta_j$ implies that all actuators are at their initial locations except for the j$^{th}$ actuator which is displaced a distance $\Delta$ in first the positive direction followed by a similar displacement in the negative direction. The difference between the slot height measurements at these two settings relative to the displacement magnitude provides a centered difference approximation to the stiffness matrix components. Centered differencing in this fashion offers higher accuracy than forward or backward differencing but does require twice as many measurements. Additional measurements at different displacements would allow the use of higher order differencing techniques, but centered differencing affords reasonable accuracy with limited effort.

Numerical differencing theory suggests that there is an optimal displacement magnitude that should be used in centered differencing to produce the most accurate stiffness matrix entries, (Richard L. Burden et al., Numerical Analysis 131-133 (2$^{nd}$ ed.) 1981). The error implicit in centered differencing is second order accurate in the displacement size, i.e., is proportional to the displacement squared. But the slot height measurements have an uncertainty associated with them so when both of these errors are accounted for, the optimized actuator unit displacement $\Delta_{opt}$ is provided in Equation 18:

$$\Delta_{opt} = \sqrt[3]{\frac{3e}{M}} \qquad \text{(Equation 18)}$$

Here, $e$ is the slot height measurement error and M is an upper bound to the third derivative of the gap-actuator relationship, $\dfrac{\partial^3 h}{\partial A^3}$.

In a typical bump test, actuator displacements of approximately 1 mil (25 micrometers) change in the slot height were used. Significant interaction generally occurs between actuators-an actuator position change produced a slot height change as far as 2 or 3 actuators away. In some embodiments, this is represented by a banded stiffness matrix. In many cases, the banded stiffness matrix can be assumed to be symmetric. For example, the matrix could have significant non-zero components only along 5 diagonals of the matrix-the main diagonal plus 2 diagonals on either side. International Patent Publication No. WO 2012/170713 (Secor, et al.) describes in greater detail an example of how "bump test" data can be used to obtain the stiffness matrix.

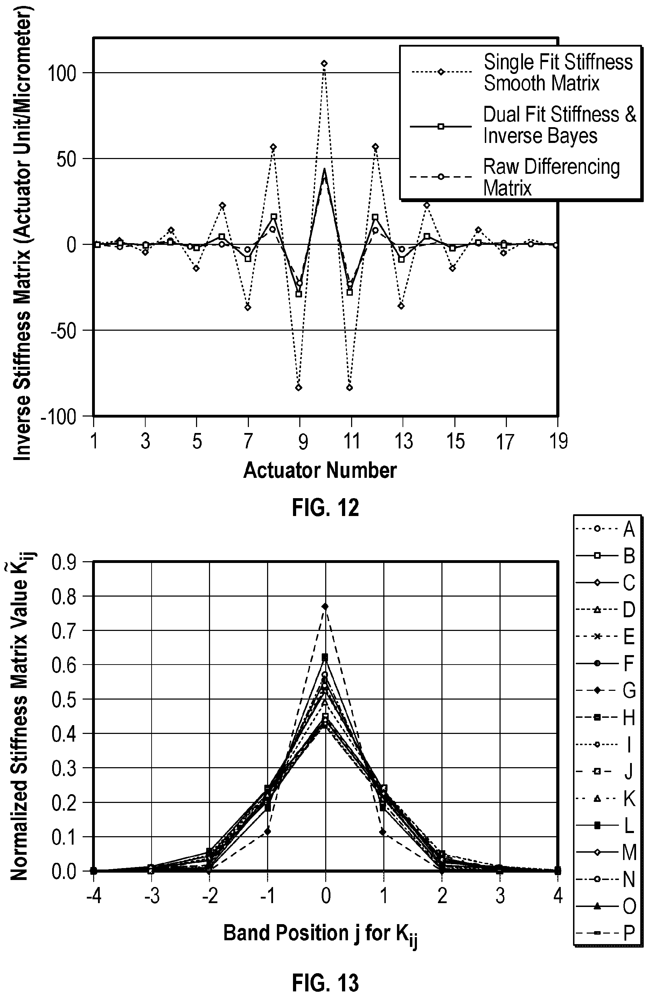

Advantageously, an inverse stiffness matrix can also be determined that transforms actuator position profiles to slot height profiles, excluding effects of deflection attributable to fluid flow through the applicator slot. Conveniently, the fitting of the inverse stiffness matrix can be obtained using the same bump test measurements as those used to fit the stiffness matrix. By performing a dual-fit method that incorporates direct transformations using both the stiffness matrix and inverse stiffness matrix, ringing can be reduced even further. This is demonstrated in FIG. 12, which shows the reduced ringing achieved using a dual-fit method versus a single-fit method involving the stiffness matrix alone. Also shown in FIG. 12 is a reduction in ringing achieved using a direct raw differencing approach based on Equation 17.

Major benefits of performing a fit to the empirical bump test data to obtain a banded matrix structure include computational efficiency, reduced computer memory storage requirements, improved accuracy by mitigating the effects of outliers and errors in data entry, and improved robustness in operation of the PLC code. In addition, a parameterized model representation of the stiffness matrix is highly desirable due to control system security benefits. Verifying that a small number of parameters have correct values and have not been corrupted is a much easier task than verifying the values of an entire stiffness matrix which may contain 400 to over 1000 elements. Further details on these fits are described later.

Once the stiffness matrix is determined, slot height measurements can be used in two ways. First, for any set of actuator settings, the resulting slot height profile can be computed by multiplying the stiffness matrix with the actuator displacements. Secondly, the actuator settings that will result in a specified slot height profile are calculated by multiplying the inverse of the stiffness matrix with the desired change in slot height. These calculations are represented by Equations 19 and 20, respectively:

$$(h - h_0) = K \bullet (A - A_0) \qquad \text{(Equation 19)}$$

$$(A - A_0) = K^{-1} \bullet (h - h_0) \qquad \text{(Equation 20)}$$

Referring now back to the Actuator Adjustment (block 412) in FIG. 4A, where the desired zero-pressure Slot Height Adjustment (block 410) is known, the inverse stiffness matrix $K^{-1}$ can finally be used according to Equation 20 to obtain the Actuator Adjustment (block 412) for achieving the Target Profile (block 407).

The above can be advantageously carried out in real time using the actuator assembly 200 in FIG. 3. Here, the controller 300 predicts settings for at least one actuator assembly 200 based on measurements from sensor 230 and operating motor 210 to locate output shaft 222 to a location corresponding to the predicted Actuator Adjustment (block 412). Once controller 300 determines, in this manner, the settings for the actuator assemblies 200 in slot die 10 corresponding to the preselected cross-web profile, slot die 10 is operated by passing an extrudate through the fluid flow path and out applicator slot 6 with the actuator assemblies 200 positioned according to the Actuator Adjustment (block 412).

A Ringing Constraint (block 411) can be applied to arrive at a different solution in instances where the degree of ringing is deemed to be significant. This is based on a discovery made when calculating the Actuator Adjustment (block 412) in absence of any such constraint. This somewhat surprising discovery occurred when comparing different model representations of the stiffness matrix K. It was observed that an accurate representation of the stiffness matrix does not necessarily translate into a good representation of the inverse stiffness matrix $K^{-1}$.

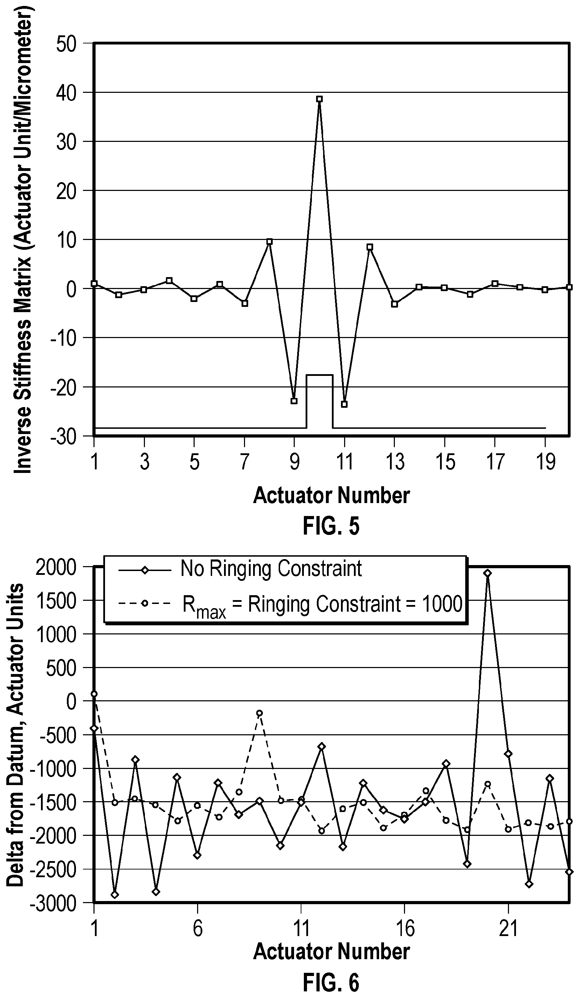

Physically the inverse stiffness matrix represents the combination of actuator moves that must be made in order to change the slot gap at only one location. To change the gap at only one location, multiple actuators must be adjusted to counteract undesired actuator interactions. FIG. 5 is also an illustration of what has been called "ringing." In order to achieve a certain gap profile, neighboring actuators tend to move in opposite directions with a large magnitude. That is, neighboring actuators tend to work against each other to a great extent. Excessive ringing, shown in the profiles for target slot height and actuator setting (the latter in arbitrary units) in FIG. 5, is undesirable because it can cause actuators to unnecessarily reach their force and bend limits and thereby limit the degree of coating uniformity that can be achieved with the control system.

With the stiffness matrix and inverse system being linear systems, there is one unique set of actuator settings that correspond to a particular set of slot gap positions. A set of actuator settings with substantial ringing is not defective in some way but is the only set of settings that will result in the desired slot gap profile given a particular stiffness matrix. But, as will be shown below, we can accept some added uncertainty in the slot gap profile in return for reducing the degree of ringing.

First, the degree of ringing can be quantified. A convenient ringing measure is the root-mean-square of the actuator curvature (Equation 21), which shall be abbreviated hereinafter as $R_{value}$, or Ring Value.

$$R_{Value} = \sqrt{\frac{\sum_{i=2}^{N_{act}-1}(A_{i-1}+A_{i+1}-2A_i)^2}{(N_{act}-2)}} \qquad \text{(Equation 21)}$$

, where $N_{act}$ is the total number of actuators. In some cases, it can be advantageous for $N_{act}$ to be fewer than the total number of actuators, such as when portions of the applicator slot are intentionally blocked by one or more deckles to extrude a narrower web.

Implicit in the Ring Value is the fact that the curvature is being computed on the actuator scale-i.e., a coordinate system where the distance between actuators is unity. In some embodiments, Equation 20 could be generalized by replacing each instance of actuator setting $A$ with $(A-A_o)$, representing its deviation from a datum value. Moreover, each $A$ could be defined as an actuator position corresponding to the actuator setting and having distance units (e.g., mm).

While a suitable penalty function can be based on the Ring Value above, other metrics can also be considered such as the average absolute ringing sawtooth amplitude (Sawtooth Amplitude) as provided in Equation 22 below.

$$Sawtooth\ Amplitude = \frac{\sum_{2}^{N_{act}-1} ABS\left\{A_i - \left(\frac{(A_{i+1}+A_{i-1})}{2}\right)\right\}}{(N_{Act}-2)} \qquad \text{(Equation 22)}$$

Following this quantification step, it is desired to penalize actuator moves so that ringing is below some value in return for accepting some small deviation in the slot gap accuracy. Although the backlash of actuator assemblies is generally low and moves are very repeatable, the actuator position uncertainty is in the neighborhood of 2 to 3 micrometers. Given this variation, one can accept a small slot gap deviation (e.g., at least 2 to 3 micrometers) if it provides an advantage such as reduced ringing and an expanded control scheme.

A common method of applying a constraint like this is the Method of Lagrange Multipliers. In essence, the original system of equations for a set of actuator moves is augmented with a penalty parameter, called the Lagrange multiplier, multiplied by the constraint. Physically the Lagrange multiplier represents the uncertainty in the equation system solution that will be accepted in return for obeying the constraint condition. In the provided control scheme, the constraint is that the ringing measure above will be kept below a certain value, referred to herein as the Ring Constant ("$R_{max}$"), which could be in units of either distance or actuator units. Mathematically, this can be represented as maximizing the function $f(x,y)$, subject to the condition that $g(x,y)=c$, where both $f$ and $g$ are assumed to have continuous partial derivatives.

To solve this, a Lagrangian function L can be defined and solved according to Equation 23:

$$L(x,y,l) = f(x,y) - l\,(g(x,y) - c) \qquad \text{(Equation 23)}$$

, where *l* is the Lagrange multiplier, and then solve based on Equation 24:

$$\nabla_{x,y,l}\, \mathrm{L}(x,y,l) = 0 \qquad \text{(Equation 24)}$$

Then, a solution to the augmented equation set is sought where the value of the Lagrange multiplier is an additional unknown to solve for. A variety of solution techniques would be possible for the augmented system, and the Lagrange bordering algorithm is a convenient choice. This algorithm allows the equation system solution to proceed in the same manner as it did without the ringing constraint, but then follows that with several matrix multiplication operations to produce the constrained solution. A basic application of the Lagrange Bordering algorithm, for example, could derive from the Equation 24A below:

$$f \begin{pmatrix} x \\ \xi \end{pmatrix} = \begin{pmatrix} A & B \\ C^T & D \end{pmatrix} \begin{pmatrix} x \\ \xi \end{pmatrix} = \begin{pmatrix} g \\ \gamma \end{pmatrix} \qquad \text{(Equation 24A)}$$

, in which *A* is the stiffness matrix, *x* represents the actuator settings, and $\xi$ is the Lagrange multiplier.

In generalizing application of the Ring Constant, two observations were made. First, in terms of curvature/-bending of the die lip or choker bar, one would expect to increase the Ring Constant if neighboring actuators are spaced further apart. This can also be a function of the leverage provided to the actuators in manipulating the flexible die lip or choker bar. This leverage, or mechanical advantage, is calculated as the rate of actuator movement with die lip movement and referred to here as its Motion Amplification-see Equation 25 below.

$$Motion\ Amplification = \frac{Actuator\ Movement}{Die\ Lip\ Slot\ Movement} \qquad \text{(Equation 25)}$$

Second, with respect to the curvature or bending of the die lip or choker bar, one could increase the Ring Constant if the Motion Amplification is increased-i.e., moving each actuator more for a given die slot change.

This allows for the creation of a unitless metric called the Ring Factor, defined by Equation 26 below:

$$Ring\ Factor = \frac{R_{max}}{Actuator\ Spacing \times Motion\ Amplification} \qquad \text{(Equation 26)}$$

The Ring Factor is a generalized form of the Ring Constant that accounts for actuator spacing and Motion Amplification due to the movement of the actuators to change of the die slot via movement of the flexible die lip (bending) or a choker bar. To illustrate application of this relationship, it would be possible to double Actuator Spacing and also double the Ring Constant ($R_{max}$), while keeping curvature deflection of the die lip constant. Similarly, if the Motion Amplification is doubled, for example by doubling the moment arm length of the flexible die lip), then the Ring Constant ($R_{max}$) can be also doubled to provide the same degree of die lip deflection.

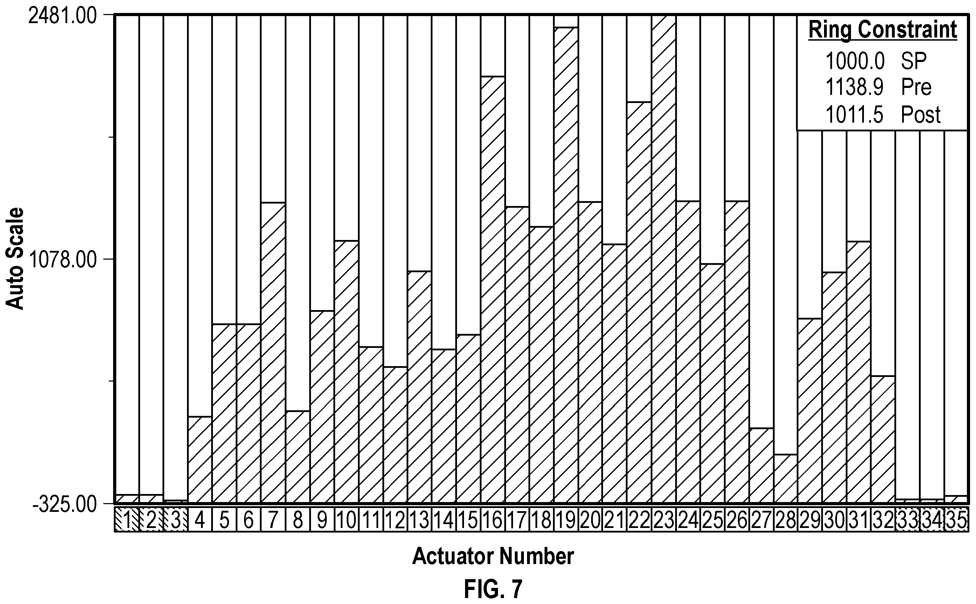

FIGS. 7-11 show an exemplary progression of slot profiles calculated with a ringing constraint as described herein for a slot die configured with a flexible die lip. Y-axis values in these bar charts represent either slot height or coating thickness dimensions, as noted below, and are automatically scaled to show cross-web variations along the applicator slot.

FIG. 7 shows differences between current and datum actuator positions in actuator units. The deviation from datum represents the actuator unit displacement from the "datum" or "flat slot" position, which is used along with the stiffness matrix to calculate the slot position (absent pressure deflection effects) and eventually the actuator positions corresponding to this slot position. In the inset of FIG. 7, "SP" refers to the Ring Constant, "Pre" refers to the Ring Value before application of a Lagrange bordering algorithm as described above, and "Post" refers to the Ring Value after applying the Lagrange bordering algorithm.

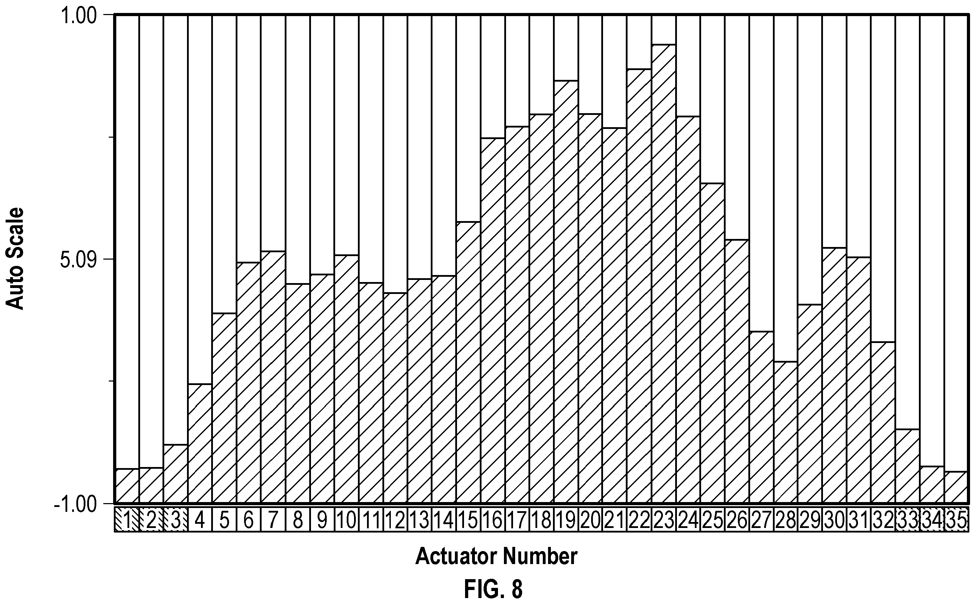

FIG. 8 shows a calculated flexible die lip profile, representing the position of one side of the applicator slot relative to a neutral slot height profile. This profile shows the degree to which the flexible die lip is deflected away from its rest state at various positions along the width of the applicator slot.

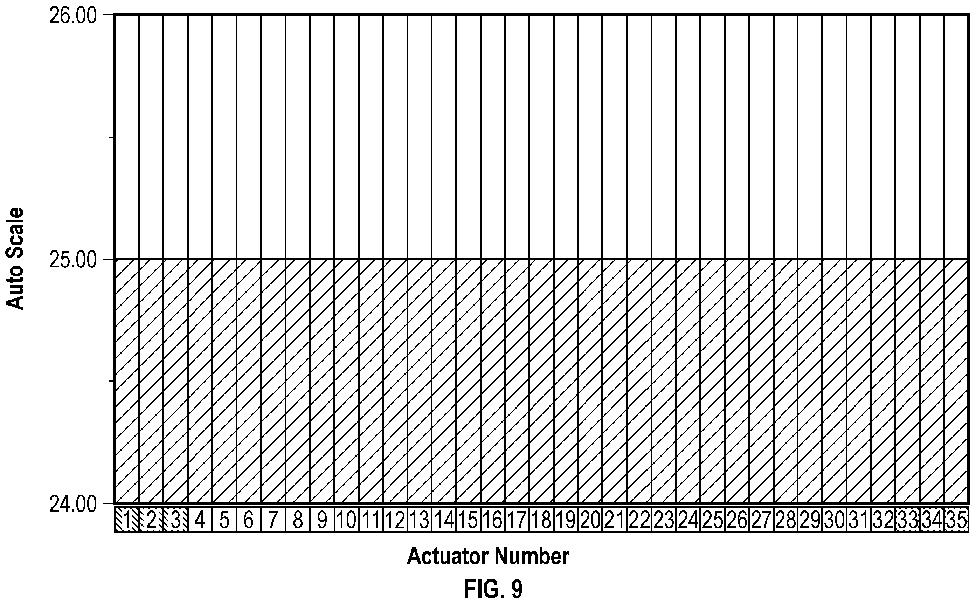

FIG. 9 shows showing the neutral (i.e., rest) slot height profile, showing the design die slot obtained when there is no flexing of the flexible die lip.

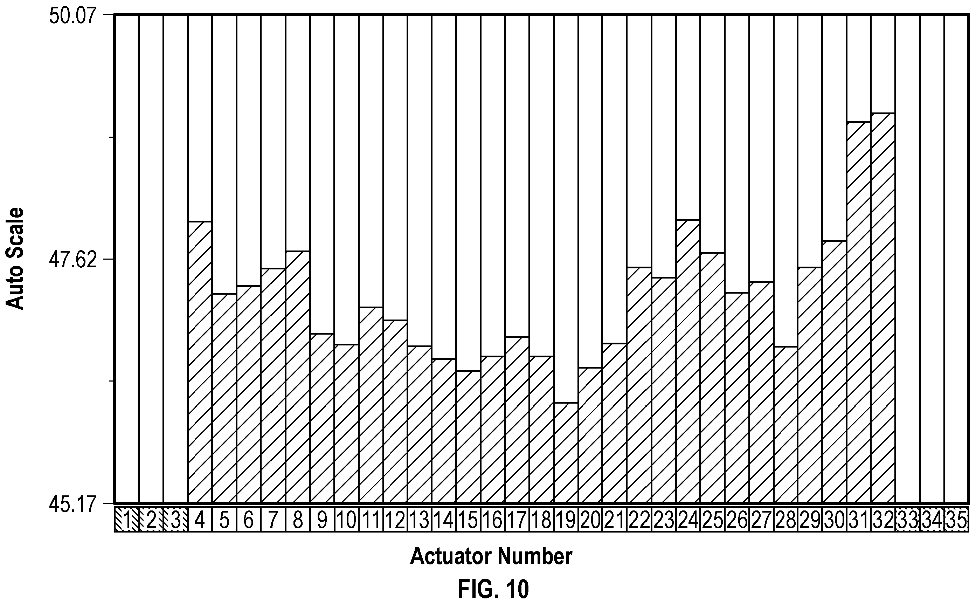

FIG. 10 shows a thickness profile of a coating obtained from this die slot adjustment process.

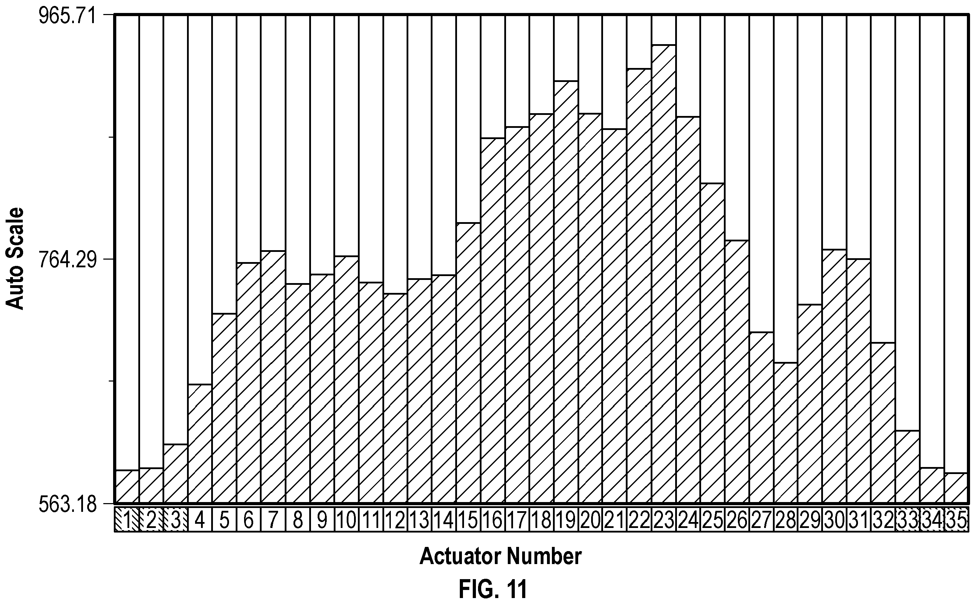

FIG. 11 shows the calculated die slot obtained by applying the stiffness matrix method to the current actuator positions combined with the datum slot and datum actuator positions. Note that the datum slot and datum actuator positions can be determined from Equations 19 and 20 above, respectively.

Exemplary values of Ring Factor calculated for various slot dies are provided in Table 2 below. As shown in this table, the dimensionless Ring Factor ranges in from 0.0018 (Die N) to 0.0096 (Die H), with an average of 0.0041 across all dies considered.

TABLE 2.

| Die | Die description | Motion Amplification | Ring Constant (actuator units) | Ring Constant (mm) | Actuator Spacing (mm) | Ring Factor |
|---|---|---|---|---|---|---|
| A | Fluid Bearing Coating Die | 0.570 | 1000 | 0.2 | 58.65 | 5.98E-03 |
| B | Extrusion Drop Die | 0.594 | 1000 | 0.2 | 61.67 | 5.46E-03 |
| C | Extrusion Drop Die | 0.632 | 1000 | 0.2 | 63.50 | 4.98E-03 |
| D | Extrusion Drop Die | 0.636 | 1000 | 0.2 | 61.88 | 5.08E-03 |
| E | Extrusion Drop Die | 0.647 | 1000 | 0.2 | 63.50 | 4.87E-03 |
| F | Slot Fed Knife Coating Die | 0.826 | 1000 | 0.2 | 60.33 | 4.02E-03 |
| G | Extrusion Film Casting Drop Die | 0.855 | 1000 | 0.2 | 60.00 | 3.90E-03 |
| H | Extrusion Drop Die | 1.314 | 4000 | 0.8 | 63.50 | 9.59E-03 |
| I | Extrusion Drop Die | 1.413 | 1000 | 0.2 | 61.85 | 2.29E-03 |
| J | Slot Fed Knife Coating Die | 1.413 | 2000 | 0.4 | 63.50 | 4.46E-03 |
| K | Rotary rod hot melt die with choker bar | 1.414 | 1000 | 0.2 | 63.50 | 2.23E-03 |
| L | Rotary rod hot melt die with choker bar | 1.414 | 1000 | 0.2 | 63.50 | 2.23E-03 |
| M | Extrusion Vacuum Contact die | 1.634 | 2000 | 0.4 | 63.50 | 3.86E-03 |
| N | Extrusion Drop Die | 1.796 | 1000 | 0.2 | 62.23 | 1.79E-03 |
| O | Extrusion Drop Die | 2.181 | 2000 | 0.4 | 59.99 | 3.06E-03 |
| P | Extrusion Drop Die | 2.181 | 2000 | 0.4 | 62.00 | 2.96E-03 |

Below are two illustrations of simulations showing how ringing can be reduced by this technique. Table 3 below shows the reduction in ringing achieved in a rotary rod die example with a choker bar for various $R_{max}$. This is also shown in FIG. 6, which shows a comparison between actuator setting profiles plotted relative to the datum profile. This figures shows the benefit of imposing a ringing constraint using an $R_{max}$ of 1000, which reduced Ring Value from 2800 (without the ringing constraint) to 852 (with the ringing constraint).

TABLE 3.

| | Ring Constant (actuator units) | | | | |
|---|---|---|---|---|---|
| | None | $R_{max}$=2000 | $R_{max}$=1500 | $R_{max}$=1200 | $R_{max}$=1000 |
| Ring Value | 2800 | 1955 | 1523 | 1226 | 853 |
| Sawtooth Amplitude | 1151 | 880 | 667 | 521 | 341 |

Therefore, at a high level, a residual vector can be used to determine a predicted degree of ringing for a proposed set of actuator positions (or actuator settings) and then a ringing constraint is then applied to obtain a revised set of actuator positions that reduces the degree of ringing relative to the predicted degree of ringing.

Collectively, these techniques can provide for a significantly higher efficiency in the die control method. Increased efficiency can, for example, derive from reducing the number of repeated cycles in the workflow 400 of FIG. 4A to achieve the best attainable coating thickness profile. Beneficially, this can result in less waste in a large-scale manufacturing process. More accurate and faster convergence can also help eliminate higher frequency disturbances to the coating thickness in the manufacturing operation than would otherwise be possible.

Following the execution of the Actuator Adjustment (block 412), workflow 400 resumes with a renewed Profile Measurement (block 402) and the process can begin again. This Profile Measurement (block 402) occurs after some time has elapsed, allowing for an iterative adjustment of the actuators. Over the course of many iterations, continuous improvements can be made to the discrete actuator settings such that the extrudate profile converges to, and closely matches, the Target Profile (block 407).

The workflow 400 can be repeated until controller 300 determines that the predicted set of settings cannot be improved and/or at periodic intervals to maintain a desired cross-web profile. A set of discrete settings can be saved as a recipe for future retrieval and use at a future time minutes, hours, or years later when similar materials, extrusion or coating properties, and processing conditions are required.

As alluded to earlier, obtaining a good representation of the inverse stiffness matrix $K^{-1}$ can be challenging. Physically the inverse stiffness matrix represents the combination of actuator moves that must be made in order change the slot gap at only one location. Therefore, the choice of K can manifest a propensity to generate ringing of the actuator positions (i.e., larger Ring Value). The elements of the stiffness matrix $K$ can be determined by a bump test and a differencing formula such as Equation 17. While this "raw" stiffness matrix from differencing (i.e., raw differencing matrix) can be used for die control, it was discovered that statistical fitting methods of the raw matrix to a model representation can mitigate the effects of experimental error on $K$, as well as account for the banded matrix expected due to the limited range of influence of neighboring actuators.

It has been discovered that an advantageous method of fitting the stiffness matrix K and/or the inverse stiffness matrix $K^{-1}$ is to use Bayesian statistical methods, such as nested sampling and/or Monte Carlo Markov chain algorithms. It was discovered that minute changes in the stiffness matrix produce inordinately large changes in the inverse. A preferred procedure can include fitting a model representation of both the stiffness matrix and its inverse to ensure that operations of Equations 19 & 20 are well-behaved. A Bayesian Nested Sampling procedure for model comparison can be found in John Skilling, "Nested Sampling for General Bayesian Computation," Bayesian Analysis, Vol. 1, Number 4, pp. 833-860 (2006).

In the Bayesian Nested Sampling framework, the likelihood of the slot gap measurements given the actuator settings is computed as well as the likelihood of the actuator settings given the slot gap measurements. In this way, both stiffness matrix and inverse matrix multiplication operations are sampled. In addition, the bump test data includes measurements from coordinated moves, where all actuators move simultaneously, along with single actuator moves. In this way the behavior of row or column sums of the stiffness matrix and its inverse are interrogated in addition to values near the stiffness matrix diagonal. As a further advantage, these nested sampling methods can determine parameter probability distributions over parameter space where measurement uncertainty and prior knowledge can be incorporated. Different model representations of the raw stiffness matrix can be compared and ranked based on model-data likelihood or model evidence. In some embodiments, the highest evidence model with the most probable parameter value (mode or mean) is used to calculate actuator settings. A parameter value estimation of the highest evidence stiffness matrix model can be obtained, for example, using a Monte Carlo Markov Chain algorithm.

Another useful parameter is the dimensionless Stiffness Motion Number which is product of the Motion Amplification and the sum of the $K_{ij}$ across the band of the stiffness matrix, as shown in Equation 27.

$$Stiffness\ Motion\ Number = Motion\ Amplification \times \sum_{j=1}^{N_{act}} K_{ij} \quad \text{(Equation 27)}$$

In this instance, it is useful to consider the Motion Amplification using an adjusted flexible die lip length represented by a flexible die lip length reduced by the measurement distance into the die slot.

The Stiffness Motion Number is a dimensionless number that can assist in predicting the scaling of sum of $K_{ij}$ across the row of the stiffness matrix $\sum_{j=1}^{N_{act}} K_{ij}$ in combination with knowledge of the Motion Amplification of the die type.

For a banded stiffness matrix, $\sum_{j=1}^{N_{act}} K_{ij} = \sum_{j=i-d}^{i+d} K_{ij}$, where $d$ is the number of diagonals along either side of the main diagonal and where $1 \leq j \leq N_{act}$ (to account for the boundaries at the ends of the applicator slot). Exemplary values of Stiffness Motion Number are found in Table 4 below.

TABLE 4.

| | Stiffness Motion Number | | |
| --- | --- | --- | --- |
| | Max | Min | Average |
| Slot fed knife coating and extrusion vacuum contact die | 9.47E-01 | 7.50E-01 | 8.68E-01 |
| Extrusion film casting drop die | 1.14E+00 | 1.08E+00 | 1.11E+00 |
| Extrusion drop die short draw zone | 1.02E+00 | 8.64E-01 | 9.47E-01 |
| Extrusion drop die only | 6.14E-01 | 4.97E-01 | 5.50E-01 |
| Rotary rod hot melt die with choker bar | 1.04E+00 | 8.81E-01 | 9.86E-01 |
| *All dies considered (including those shown in Table 2)* | 1.29E+00 | 4.97E-01 | 8.07E-01 |

In some embodiments, the relative value of the $K_{ij}$ can be predicted from a normalized stiffness parameter for a similar die configuration. One example of a normalized stiffness parameter, $\tilde{K}_{ij}$, is defined in Equation 28, whose values are shown in FIG. 13 for a variety of exemplary slot dies.

$$\widetilde{K}_{ij} = \frac{K_{ij}}{\sum_{m=(i-d)}^{(i+d)} K_{im}} \qquad \text{(Equation 28)}$$

, where d is the number of diagonals along either side of the main diagonal. Unlike the stiffness parameter, the normalized stiffness parameter is unitless.

Exemplary stiffness parameters, both with and without normalization, are listed for fluid bearing coating die "A" (from FIG. 13) in Table 5 below.

This chart shows demonstrates a characteristic relative influence of actuator position on its neighbors. Depending on the mechanical details of the die lip or choker bar in these particular examples, we observe that $K_{ii}$ accounts for about 39% to 80% of the influence on the slot position. In an exemplary control method, the stiffness matrix and/or inverse stiffness matrix is calculated from a pre-determined normalized stiffness in which

TABLE 5

| | $K_{ij}$ | $\tilde{K}_{ij}$ |
| --- | --- | --- |
| $K_{i,i-4}$ | 3.05E-08 | 2.17E-07 |
| $K_{i,i-3}$ | 1.92E-05 | 1.37E-04 |
| $K_{i,i-2}$ | 1.92E-03 | 1.36E-02 |
| $K_{i,i-1}$ | 3.02E-02 | 2.16E-01 |
| $K_{i,i}$ | 7.62E-02 | 5.41E-01 |
| $K_{i,i+1}$ | 3.02E-02 | 2.16E-01 |
| $K_{i,i+2}$ | 1.92E-03 | 1.36E-02 |
| $K_{i,i+3}$ | 1.92E-05 | 1.37E-04 |
| $K_{i,i+4}$ | 3.05E-08 | 2.17E-07 |
| *Sum of mid-bolt stiffness parameters* | 1.40E-01 | |

$K_{i,i}$ ranges from 0.35 to 0.8, $K_{i,i\pm1}$ ranges from 0.1 to 0.3, and $K_{i,i\pm2}$ ranges from 0.0 to 0.1, $K_{i,i\pm3}$ ranges from 0.0 to 0.03, or 0.0 to 0.05, and $K_{i,i\pm4}$ ranges from 0.0 to 0.02.

Additionally, the stiffness matrix K and inverse stiffness matrix $K^{-1}$ must correctly translate the physical actuator movement to slot height change and vice versa, according to Equations 19 and 20. This overall power is the sum of the $K_{ij}$ across the band of the stiffness matrix, $\sum_{j=1}^{N} K_{ij}$ , where N is the number of actuators. For fluid bearing coating die "A" above, the sum of the Mid-Row Stiffness Parameters for Die "A" is 1.40E-01 (in micrometers per actuator unit).

In some embodiments, the techniques described herein, including wavelet-based techniques, can be used in combination with other methods to control coating thickness. As an example, actuator adjustments made based on these techniques can provide an extrudate profile that is further optimized or refined using a cross-web heat distribution system as described in International Patent Nos. WO2006/130141 (Karg et al), WO2006/130142 (Karg et al), and WO2006/130143 (Karg et al). The wavelet scale and location of each transform can be tailored to the sensitivity and type of actuator being used, resulting in a more efficient control system.

An alternative workflow 500 is described in FIG. 4B. The workflow 500 contains many steps that are essentially analogous to those in workflow 400 in FIG. 4A, including a Profile Measurement (block 502), Web-to-Die Mapping (block 504), Data Compression (block 506), obtaining a Profile Deviation (block 508) based on a Target Profile (block 507), Slot Height Adjustment (block 510), and Actuator Adjustment (block 512). Further, like in workflow 400, the Slot Height Adjustment (block 510) optionally incorporates a Ringing Constraint (block 511) and data representing a Current Slot Height (block 509). These operations, having already been described above, shall not be reexamined here.

The workflow 500 differs from the prior workflow in that a Slot Height Constraint (block 513) is applied over at least some portion of the applicator slot after determination of the Current Slot Height (block 509). In this mode of operation, this constraint provides that the calculated slot height profile should be essentially "frozen" irrespective of any calculated adjustments that would normally be demanded based on Equations 8 and 12. While slot heights might be "frozen" over some portion of the applicator slot, this does not necessarily imply that the corresponding actuator settings (i.e., $A_i$) would be frozen. Fluctuations in fluid dynamic effects can require iterative actuator adjustments to maintain a constant slot height.

In some embodiments, the workflow 500 determines an average actuator setting at the outset and ensures that this average actuator setting is held constant at every subsequent iteration of workflow 500. This can be achieved by offsetting the profile of actuator settings upwards or downwards in unison, as necessary, to prevent the average actuator setting from changing over time. In practice, this operation can be achieved using the following subroutine:

1) Calculate the NON-FROZEN AVERAGE NEW SETPOINT ACTUATOR SETTINGS {representing the actuator settings in absence of Slot Height Constraint (block 513)}
2) Define (AVERAGE_DIFFERENCE) := (NON-FROZEN AVERAGE NEW SETPOINT ACTUATOR SETTINGS) - (NON-FROZEN AVERAGE ACTUAL ACTUATOR SETTINGS)
3) Execute the following algorithm:

```
      FOR i =1 to (Number_of_Actuators)
             IF Actuator[i] is NOT Frozen
                    Define ACTUATOR_SP[i] := ACTUATOR_SP_NEW[i] -
                    AVERAGE_DIFFERENCE
             END IF
END_FOR {thereby restoring the NON-FROZEN AVERAGE NEW
SETPOINT ACTUATOR SETTINGS}
```

The modified workflow 500 can be highly advantageous in avoiding undesirable drift, also known as creep, in the average slot height during the course of repeated iterations. Such drift can occur as a result of circumstances that would not be accounted for by the mathematical constructs of a normal workflow. For instance, a situation may arise in which actuators are unable to reach their desired settings/positions because of physical limitations. Such limitations can be based on predicted force values exceeding the permissible amount of force that can be safely applied without damage to the die. Actuators can also reach bend limits attributable to the continuity of the flexible die lip or choker bar, which prevents neighboring actuators from having setpoints too far apart from each other. Yet another limitation can arise from discontinuities in slot height profile created when one or more deckles are inserted into the applicator slot, particularly where blocked and unblocked zones of the applicator slot come together. Advantageously, the workflow 500 can help stabilize slot height profile, along with corresponding extrudate thickness profile, in each of these situations.

The techniques described in this disclosure, such as techniques described with respect to controller 300, may be implemented, at least in part, in hardware, software, firmware or any combination thereof. For example, various examples of the techniques may be implemented within one or more microprocessors, digital signal processors (DSPs), application specific integrated circuits (ASICs), field programmable gate arrays (FPGAs), or any other equivalent integrated or discrete logic circuitry, as well as any combinations of such components, embodied in controllers, user interfaces or other devices. The term "controller" may generally refer to any of the foregoing logic circuitry, alone or in combination with other logic circuitry, or any other equivalent circuitry.

When implemented in software, the functionality ascribed to the systems and controllers described in this disclosure may be embodied as instructions on a computer-readable storage medium such as random access memory (RAM), read-only memory (ROM), non-volatile random access memory (NVRAM), electrically erasable programmable read-only memory (EEPROM), FLASH memory, magnetic media, optical media, or the like. The instructions may be executed to cause one or more processors to support one or more examples of the functionality described in this disclosure.

Various examples have been described in the foregoing passages. These and other examples are within the scope of the claims that follow.

The preceding description, given in order to enable one of ordinary skill in the art to practice the claimed disclosure, is not to be construed as limiting the scope of the disclosure, which is defined by the claims and all equivalents thereto.

## Claims

1. A method of adjusting a slot die (10) comprising an applicator slot (6) extending along a width of the slot die (10), wherein the applicator slot (6) is in fluid communication with a fluid flow path through the slot die (10), at least one of a group consisting of: a choker bar (11) and flexible die lip (13), and a plurality of actuators (220) spaced along the width of the slot die (10), each actuator (220) operatively coupled to the choker bar (11) or flexible die lip (13) to adjust a slot or choker bar (11) height profile at its respective location to provide a local adjustment of fluid flow through the applicator slot (6), wherein the method comprises:

   measuring thickness values of an extrudate provided from the applicator slot (6);
   mapping the measured thickness values to a corresponding position along the width of the slot die (10);
   executing a data compression of the measured thickness values to obtain a residual vector representing deviation of the measured thickness values from desired thickness values; and
   adjusting a position of one or more of the plurality of actuators (220) based on the residual vector to obtain a corrected shape for the choker bar (11) or flexible die lip (13), wherein said adjusting comprises

      using the residual vector to determine a predicted degree of ringing for a proposed set of actuator (220) positions and then
      applying a ringing constraint to obtain a revised set of actuator (220) positions that reduces the degree of ringing relative to the predicted degree of ringing.

2. The method of claim 1, wherein the degree of ringing is predicted according to a calculated curvature of the slot or choker bar (11) height profile.

3. The method of claim 1 or 2, wherein the degree of ringing is reduced by allowing some degree of inaccuracy in the revised set of actuator (220) positions in exchange for reducing the degree of ringing below a threshold value.

4. The method of claim 3, wherein the threshold value is correlated with a curvature in an actuator position profile.

5. The method of claim 4, wherein the curvature corresponds to a Ring Factor of from 0 to 0.01 preferably from 0. to 0.006.

6. The method of any one of claims 3 to 5, wherein the condition of allowing some inaccuracy in the corrected shape in exchange for reducing the degree of ringing below the threshold value is applied through a Method of Lagrange multipliers.

7. The method of claim 6, wherein the method of Lagrange multipliers comprises solving for a Lagrange multiplier based on the threshold value.

8. The method of claim 7, wherein solving for the Lagrange multiplier comprises using a bordering algorithm for an augmented system.

9. The method of any one of claims 1 to 8, wherein one or more actuators (220) are adjusted based on a set of discrete actuator settings based on a stiffness matrix that transforms actuator position profiles to slot or choker bar (11) height profiles, the slot or choker bar (11) height profiles excluding effects of deflection attributable to fluid flow through the applicator slot (6).

10. The method of claim 9, further comprising fitting a model representation of the stiffness matrix using bump test data, wherein the set of discrete settings is determined from both the stiffness matrix and an inverse stiffness matrix that transforms actuator position profiles to slot or choker bar (11) height profiles, the slot or choker bar (11) height profiles excluding effects of deflection attributable to fluid flow through the applicator slot (6).

11. The method of claim 10, further comprising fitting an inverse stiffness matrix using the same bump test data used to fit a model representation of the stiffness matrix.

12. The method of claim 10 or 11, wherein parameters of the stiffness matrix model representation and/or its inverse is estimated using a nested sampling algorithm, Monte Carlo Markov Chain algorithm, or both.

13. The method of any one of claims 9 to 12, wherein the stiffness matrix, when normalized, includes: $K_{i,i}$ values ranging from 0.35 to 0.8; $K_{i,i\pm 1}$ values ranging from 0.1 to 0.3; $K_{i,i\pm 2}$ values ranging from 0 to 0.1; $K_{i,i\pm 3}$ values ranging from 0.0 to 0.03, or optionally ranging from 0.0 to 0.05; and $K_{i,i\pm 4}$ values ranging from 0.0 to 0.02.

14. A process for making an extruded article, the process comprising:

adjusting a slot die (10) according to the method of any one of claims 1 to 13; and
extruding through the applicator slot (6) of the slot die (10) an extrudate based on the adjusted slot die (10) to obtain the extruded article.

15. A system comprising:

a slot die (10) including

an applicator slot (6) extending along a width of the slot die (10), wherein the applicator slot (6) is in fluid communication with a fluid flow path through the slot die (10),
at least one of a group consisting of: a choker bar (11) and a flexible die lip (13), and
a plurality of actuators (220) spaced along the width of the slot die (10), each actuator (220) operatively coupled to the choker bar (11) or flexible die lip (13) to adjust a slot or choker bar (11) height profile at its respective location to provide a local adjustment of fluid flow through the applicator slot (6); and

a controller (300) configured to receive thickness values of an extrudate provided from the applicator slot (6), map the received thickness values to a corresponding position along the width of the slot die (10); execute a data compression of the received thickness values to obtain a residual vector representing deviation of the received thickness values from desired thickness values; and adjust a position of one or more of the plurality of actuators (220) based on the residual vector to obtain a corrected shape for the choker bar (11) or flexible die lip (13), wherein said adjustment comprises using the residual vector to determine a predicted degree of ringing for a proposed set of actuator (220) positions, and then applying a ringing constraint to obtain a revised set of actuator (220) positions that reduces the degree of ringing relative to the predicted degree of ringing.

**Patentansprüche**

1. Ein Verfahren zum Einstellen einer Schlitzdüse (10), aufweisend einen Applikatorschlitz (6), der sich entlang einer Breite der Schlitzdüse (10) erstreckt, wobei der Applikatorschlitz (6) in Fluidverbindung mit einem Fluidströmungsweg durch die Schlitzdüse (10) steht, mindestens eines aus einer Gruppe, bestehend aus: einem Staubalken (11) und einer flexiblen Düsenlippe (13), und eine Mehrzahl von Aktuatoren (220), die entlang der Breite der Schlitzdüse (10) beabstandet sind, wobei jeder Aktuator (220) mit dem Staubalken (11) oder der flexiblen Düsenlippe (13) betriebsfähig gekoppelt ist, um ein Höhenprofil eines Schlitzes oder des Staubalkens (11) an seiner jeweiligen Stelle einzustellen, um eine lokale Einstellung einer Fluidströmung durch den Applikatorschlitz (6) bereitzustellen, wobei das Verfahren aufweist:

Messen von Dickenwerten eines Extrudats, das von dem Applikatorschlitz (6) bereitgestellt wird;
Zuordnen der gemessenen Dickenwerte zu einer entsprechenden Position entlang der Breite der Schlitzdüse (10);
Ausführen einer Datenkomprimierung der gemessenen Dickenwerte, um einen Restvektor zu erhalten, der eine Abweichung der gemessenen Dickenwerte von gewünschten Dickenwerten darstellt; und
Einstellen einer Position eines oder mehrerer der Mehrzahl von Aktuatoren (220) basierend auf dem Restvektor, um eine korrigierte Form für den Staubalken (11) oder die flexible Düsenlippe (13) zu erhalten, wobei das Einstellen aufweist

Verwenden des Restvektors, um einen vorhergesagten Grad an Ringing für einen vorgeschlagenen Satz von Positionen des Aktuators (220) zu bestimmen, und dann

Anwenden einer Ringing-Beschränkung, um einen überarbeiteten Satz von Positionen des Aktuators (220) zu erhalten, der den Grad an Ringing relativ zu dem vorhergesagten Grad des Ringing verringert.

**2.** Das Verfahren nach Anspruch 1, wobei der Grad an Ringing gemäß einer berechneten Krümmung des Höhenprofils des Schlitzes oder des Staubalkens (11) vorhergesagt wird.

**3.** Das Verfahren nach Anspruch 1 oder 2, wobei der Grad an Ringing über ein Erlauben eines gewissen Grads an Ungenauigkeit in dem überarbeiteten Satz von Positionen des Aktuators (220) im Austausch für ein Verringern des Grads an Ringing unter einen Schwellenwert verringert wird.

**4.** Das Verfahren nach Anspruch 3, wobei der Schwellenwert mit einer Krümmung in einem Aktuatorpositionsprofil korreliert ist.

**5.** Das Verfahren nach Anspruch 4, wobei die Krümmung einem Ring-Faktor von 0 bis 0,01, vorzugsweise von 0 bis 0,006, entspricht.

**6.** Das Verfahren nach einem der Ansprüche 3 bis 5, wobei die Bedingung des Erlaubens einer gewissen Ungenauigkeit in der korrigierten Form im Austausch für das Verringern des Grads an Ringing unter den Schwellenwert durch ein Verfahren von Lagrange-Multiplikatoren angewendet wird.

**7.** Das Verfahren nach Anspruch 6, wobei das Verfahren von Lagrange-Multiplikatoren ein Lösen eines Lagrange-Multiplikators basierend auf dem Schwellenwert aufweist.

**8.** Das Verfahren nach Anspruch 7, wobei das Lösen des Lagrange-Multiplikators das Verwenden eines Begrenzungsalgorithmus für ein erweitertes System aufweist.

**9.** Das Verfahren nach einem der Ansprüche 1 bis 8, wobei ein oder mehrere Aktuatoren (220) basierend auf einem Satz von diskreten Aktuatoreinrichtungen basierend auf einer Steifigkeitsmatrix eingestellt werden, die Aktuatorpositionsprofile in Höhenprofile (11) des Schlitzes oder des Staubalkens umwandelt, wobei die Höhenprofile (11) des Schlitzes oder des Staubalkens Ablenkungseffekte, die auf die Fluidströmung durch den Applikatorschlitz (6) zurückzuführen sind, ausschließen.

**10.** Das Verfahren nach Anspruch 9, ferner aufweisend ein Anpassen einer Modelldarstellung der Steifigkeitsmatrix unter Verwendung von Stoßtestdaten, wobei der Satz von diskreten Einrichtungen aus sowohl der Steifigkeitsmatrix als auch einer inversen Steifigkeitsmatrix bestimmt wird, die Aktuatorpositionsprofile in Höhenprofile des Schlitzes oder des Staubalkens (11) umwandelt, wobei die Höhenprofile des Schlitzes oder des Staubalkens (11) Ablenkungseffekte, die auf die Fluidströmung durch den Applikatorschlitz (6) zurückzuführen sind, ausschließen.

**11.** Das Verfahren nach Anspruch 10, ferner aufweisend das Anpassen einer inversen Steifigkeitsmatrix unter Verwendung derselben Stoßtestdaten, die verwendet werden, um eine Modelldarstellung der Steifigkeitsmatrix anzupassen.

**12.** Das Verfahren nach Anspruch 10 oder 11, wobei Parameter der Steifigkeitsmatrixmodelldarstellung und/oder deren Inverse unter Verwendung eines verschachtelten Abtastalgorithmus, eines Monte-Carlo-Markov-Ketten-Algorithmus oder beider geschätzt werden.

**13.** Das Verfahren nach einem der Ansprüche 9 bis 12, wobei die Steifigkeitsmatrix, wenn sie normalisiert ist, aufweist: Werte für $K_{i,i}$, die von 0,35 bis 0,8 reichen; Werte für $K_{i,i\pm1}$, die von 0,1 bis 0,3 reichen; Werte für $K_{i,i\pm2}$, die von 0 bis 0,1 reichen; Werte für $K_{i,i\pm3}$, die von 0,0 bis 0,03 reichen oder optional von 0,0 bis 0,05 reichen; und Werte für $K_{i,i\pm4}$, die von 0,0 bis 0,02 reichen.

**14.** Ein Prozess zum Herstellen eines extrudierten Gegenstands, der Prozess aufweisend:

Einstellen einer Schlitzdüse (10) nach dem Verfahren einer der Ansprüche 1 bis 13; und
Extrudieren, durch den Applikatorschlitz (6) der Schlitzdüse (10), eines Extrudats basierend auf der eingestellten Schlitzdüse (10), um den extrudierten Gegenstand zu erhalten.

**15.** Ein System, aufweisend:

eine Schlitzdüse (10), aufweisend

einen Applikatorschlitz (6), der sich entlang einer Breite der Schlitzdüse (10) erstreckt, wobei der Applikatorschlitz (6) in Fluidverbindung mit einem Fluidströmungsweg durch die Schlitzdüse (10) steht,

mindestens eines aus einer Gruppe, bestehend aus: einem Staubalken (11) und einer flexiblen Düsenlippe (13), und

eine Mehrzahl von Aktuatoren (220), die entlang der Breite der Schlitzdüse (10) beabstandet sind, wobei jeder Aktuator (220) mit dem Staubalken (11) oder der flexiblen Düsenlippe (13) betriebsfähig gekoppelt ist, um ein Höhenprofil des Schlitzes oder des Staubalkens (11) an seiner jeweiligen Stelle einzustellen, um eine lokale Einstellung des Flüssigkeitsflusses durch den Applikatorschlitz (6) bereitzustellen; und

eine Steuerung (300), die konfiguriert ist, um Dickenwerte eines Extrudats zu empfangen, das von dem Applikatorschlitz (6) bereitgestellt wird, die empfangenen Dickenwerte zu einer entsprechenden Position entlang der Breite der Schlitzdüse (10) zuzuordnen; eine Datenkomprimierung der empfangenen Dickenwerte auszuführen, um einen Restvektor zu erhalten, der die Abweichung der empfangenen Dickenwerte von gewünschten Dickenwerten darstellt; und eine Position eines oder mehrerer der Mehrzahl von Aktuatoren (220) basierend auf dem Restvektor einzustellen, um eine korrigierte Form für den Staubalken (11) oder die flexible Düsenlippe (13) zu erhalten, wobei die Einstellung das Verwenden des Restvektors, um einen vorhergesagten Grades an Ringing für einen vorgeschlagenen Satz von Positionen (220) des Aktuators zu bestimmen, und dann das Anwenden einer Ringing-Beschränkung aufweist, um einen überarbeiteten Satz von Positionen (220) des Aktuators zu erhalten, der den Grad an Ringing relativ zu dem vorhergesagten Grad an Ringing verringert.

**Revendications**

1. Procédé de réglage d'une filière à fente (10) comprenant une fente d'applicateur (6) s'étendant le long d'une largeur de la filière à fente (10), dans lequel la fente d'applicateur (6) est en communication fluidique avec un chemin d'écoulement de fluide à travers la filière à fente (10), au moins l'un d'un groupe consistant en : une barre d'étranglement (11) et une lèvre de filière flexible (13), et une pluralité d'actionneurs (220) espacés le long de la largeur de la filière à fente (10), chaque actionneur (220) accouplé de manière fonctionnelle à la barre d'étranglement (11) ou à la lèvre de filière flexible (13) pour régler un profil de hauteur de fente ou de barre d'étranglement (11) à son emplacement respectif pour fournir un réglage local de l'écoulement du fluide à travers la fente d'applicateur (6), dans lequel le procédé comprend :

   la mesure des valeurs d'épaisseur d'un extrudat provenant de la fente d'applicateur (6) ;
   la mise en correspondance des valeurs d'épaisseur mesurées avec une position correspondante le long de la largeur de la filière à fente (10) ;
   l'exécution d'une compression des données des valeurs d'épaisseur mesurées pour obtenir un vecteur résiduel représentant l'écart entre les valeurs d'épaisseur mesurées et les valeurs d'épaisseur souhaitées ; et
   le réglage de la position d'un ou de plusieurs de la pluralité d'actionneurs (220) en fonction du vecteur résiduel afin d'obtenir une forme corrigée pour la barre d'étranglement (11) ou la lèvre de filière flexible (13), dans lequel ledit réglage comprend

      l'utilisation du vecteur résiduel pour déterminer un degré de ringing prédit pour un ensemble proposé de positions de l'actionneur (220), puis
      l'application d'une contrainte de ringing pour obtenir un ensemble révisé de positions de l'actionneur (220) qui réduit le degré de ringing par rapport au degré de ringing prédit.

2. Procédé selon la revendication 1, dans lequel le degré de ringing est prédit en fonction d'une courbure calculée du profil de hauteur de la fente ou de la barre d'étranglement (11).

3. Procédé selon la revendication 1 ou 2, dans lequel le degré de ringing est réduit en autorisant un certain degré d'imprécision dans l'ensemble révisé des positions de l'actionneur (220) en échange d'une réduction du degré de ringing en dessous d'une valeur seuil.

4. Procédé selon la revendication 3, dans lequel la valeur seuil est corrélée à une courbure dans un profil de position de l'actionneur.

5. Procédé selon la revendication 4, dans lequel la courbure correspond à un facteur de ringing de 0 à 0,01, de préférence de 0 à 0,006.

**6.** Procédé selon l'une quelconque des revendications 3 à 5, dans lequel la condition d'autoriser une certaine imprécision dans la forme corrigée en échange d'une réduction du degré de ringing en dessous de la valeur seuil est appliquée par le biais d'une méthode de multiplicateurs de Lagrange.

**7.** Procédé selon la revendication 6, dans lequel la méthode des multiplicateurs de Lagrange comprend la résolution d'un multiplicateur de Lagrange en fonction de la valeur seuil.

**8.** Procédé selon la revendication 7, dans lequel la résolution du multiplicateur de Lagrange comprend l'utilisation d'un algorithme de frontière pour un système augmenté.

**9.** Procédé selon l'une quelconque des revendications 1 à 8, dans lequel un ou plusieurs actionneurs (220) sont ajustés en fonction d'un ensemble de réglages discrets de l'actionneur en fonction d'une matrice de rigidité qui transforme les profils de position de l'actionneur en profils de hauteur de la fente ou de la barre d'étranglement (11), les profils de hauteur de la fente ou de la barre d'étranglement (11) excluant les effets de déflexion attribuables à l'écoulement du fluide dans la fente de l'applicateur (6).

**10.** Procédé selon la revendication 9, comprenant en outre l'ajustement d'une représentation modèle de la matrice de rigidité à l'aide de données de test de choc, dans lequel l'ensemble de réglages discrets est déterminé à la fois à partir de la matrice de rigidité et d'une matrice de rigidité inverse qui transforme les profils de position de l'actionneur en profils de hauteur de la fente ou de la barre d'étranglement (11), les profils de hauteur de la fente ou de la barre d'étranglement (11) excluant les effets de déflexion attribuables à l'écoulement du fluide dans la fente de l'applicateur (6).

**11.** Procédé selon la revendication 10, comprenant en outre l'ajustement d'une matrice de rigidité inverse à l'aide des mêmes données de test de choc que celles utilisées pour ajuster une représentation modèle de la matrice de rigidité.

**12.** Procédé selon la revendication 10 ou 11, dans lequel les paramètres de la représentation modèle de la matrice de rigidité et/ou son inverse sont estimés à l'aide d'un algorithme d'échantillonnage imbriqué, d'un algorithme de chaîne de Markov de Monte Carlo, ou des deux.

**13.** Procédé selon l'une quelconque des revendications 9 à 12, dans lequel la matrice de rigidité, lorsqu'elle est normalisée, comporte : $K_{i,i}$ valeurs allant de 0,35 à 0,8 ; $K_{i,i\pm1}$ valeurs allant de 0,1 à 0,3 ; $K_{i,i\pm2}$ valeurs allant de 0 à 0,1 ; $K_{i,i\pm3}$ allant de 0,0 à 0,03, ou éventuellement de 0,0 à 0,05 ; et $K_{i,i\pm4}$ valeurs allant de 0,0 à 0,02.

**14.** Procédé de fabrication d'un article extrudé, le procédé comprenant :

le réglage d'une filière à fente (10) suivant le procédé selon l'une quelconque des revendications 1 à 13 ; et
l'extrusion à travers la fente d'applicateur (6) de la filière à fente (10) d'un extrudat en fonction de la filière à fente (10) ajustée pour obtenir l'article extrudé.

**15.** Système comprenant :

une filière à fente (10) comprenant
une fente de l'applicateur (6) s'étendant le long d'une largeur de la filière à fente (10), dans lequel la fente d'applicateur (6) est en communication fluidique avec un chemin d'écoulement de fluide à travers la filière à fente (10),
au moins l'un du groupe constitué de : une barre d'étranglement (11) et une lèvre de filière flexible (13), et
une pluralité d'actionneurs (220) espacés le long de la largeur de la filière à fente (10), chaque actionneur (220) étant accouplé de manière fonctionnelle à la barre d'étranglement (11) ou à la lèvre de filière flexible (13) pour ajuster un profil de hauteur de la fente ou de la barre d'étranglement (11) à son emplacement respectif afin de fournir un réglage local de l'écoulement de fluide à travers la fente de l'applicateur (6) ; et
un dispositif de commande (300) configuré pour recevoir les valeurs d'épaisseur d'un extrudat provenant de la fente de l'applicateur (6), la mise en correspondance des valeurs d'épaisseur reçues avec une position correspondante sur la largeur de la filière à fente (10) ; l'exécution d'une compression des données des valeurs d'épaisseur reçues pour obtenir un vecteur résiduel représentant l'écart entre les valeurs d'épaisseur reçues et les valeurs d'épaisseur souhaitées ; et le réglage de la position d'un ou de plusieurs de la pluralité d'actionneurs (220) sur la base du vecteur résiduel afin d'obtenir une forme corrigée pour la barre d'étranglement (11) ou la lèvre de filière flexible (13), dans lequel ledit ajustement comprend l'utilisation du vecteur résiduel pour déterminer un degré de ringing prédit pour un ensemble proposé de positions de l'actionneur (220), puis l'application d'une contrainte de ringing afin d'obtenir un ensemble révisé de positions de l'actionneur (220) qui réduit le degré de ringing par rapport au degré de ringing prédit.

**FIG. 1**

**FIG. 2**

200

Controller
300

Motor
210

Sensor
230

Linear
Actuator
220

232

222

240

248

246

242

244

252

**FIG. 3**

400 ⌐⟍

402 — Profile Measurement

404 — Web-to-Die Mapping

406 — Data Compression

407 — Target Profile

408 — Profile Deviation

409 — Current Slot Height

410 — Slot Height Adjustment

411 — Ringing Constraint

412 — Actuator Adjustment

**FIG. 4A**

500 ⌐⟍

502 — Profile Measurement

504 — Web-to-Die Mapping

507 — Target Profile

506 — Data Compression

513 — Slot Height Constraint

508 — Profile Deviation

509 — Current Slot Height

510 — Slot Height Adjustment

511 — Ringing Constraint

512 — Actuator Adjustment

**FIG. 4B**

FIG. 5

FIG. 6

**FIG. 7**

FIG. 8

EP 4 259 341 B1

**FIG. 9**

FIG. 10

**Actuator Number**

**FIG. 11**

EP 4 259 341 B1

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1987942 A2
- EP 608918 A1
- US 9044894 B, Loukusa
- US 9216535 B, Trice
- US 9579684 B, Yapel
- US 9744708 B, Loukusa
- US 9700911 B, Nakano
- WO 2019219724 A, Colell
- WO 2012170713 A, Secor
- WO 2006130141 A, Karg
- WO 2006130142 A, Karg
- WO 2006130143 A, Karg

**Non-patent literature cited in the description**

- **JOHN SKILLING**. Nested Sampling for General Bayesian Computation. *Bayesian Analysis*, 2006, vol. 1 (4), 833-860